(19) Europäisches Patentamt
European Patent Office
Office européen des brevets

(11) **EP 4 113 660 A1**

(12) **EUROPEAN PATENT APPLICATION**
published in accordance with Art. 153(4) EPC

(43) Date of publication:
**04.01.2023 Bulletin 2023/01**

(21) Application number: **20952074.1**

(22) Date of filing: **16.09.2020**

(51) International Patent Classification (IPC):
***H01M 4/485*** *(2010.01)*

(52) Cooperative Patent Classification (CPC):
Y02E 60/10

(86) International application number:
**PCT/CN2020/115435**

(87) International publication number:
**WO 2022/047832 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2020 CN 202010925895**

(71) Applicant: **Shenzhen Ori Technology Co., Limited**
**Shenzhen, Guangdong 518107 (CN)**

(72) Inventors:
- **LI, Yan**
  **Shenzhen, Guangdong 518107 (CN)**
- **GAO, Han**
  **Shenzhen, Guangdong 518107 (CN)**
- **GE, Le**
  **Shenzhen, Guangdong 518107 (CN)**
- **CHEN, Le**
  **Shenzhen, Guangdong 518107 (CN)**
- **GAO, Yuxin**
  **Shenzhen, Guangdong 518107 (CN)**
- **LIU, Yihan**
  **Shenzhen, Guangdong 518107 (CN)**
- **YE, Yukai**
  **Shenzhen, Guangdong 518107 (CN)**
- **YANG, Ning**
  **Shenzhen, Guangdong 518107 (CN)**

(74) Representative: **Lermer, Christoph**
**LermerRaible Patent- u. Rechtsanwalts PartGmbB**
**Lessingstrasse 6**
**80336 München (DE)**

(54) **METHOD FOR PREPARING MATERIAL HAVING COMPOSITION GRADIENT CHARACTERISTIC, AND APPLICATION IN BATTERY**

(57) The invention relates to a method for preparing materials with composition gradient characteristics. After mixing a lithium source with the prepared precursor, raise the temperature from room temperature to 300°C ~600°C at 2°C /min~10°C /min and maintain it, and then sinter for 5 hours~18 hours, cool with the furnace, then raise the temperature from room temperature to 600 °C ~1200 °C at 2 °C /min~10 °C /min and maintain it, and sinter for 5 hours~18 hours, and the material is thus obtained. The material prepared with the method provided by the invention has composition gradient characteristic, and its application to the positive electrode of battery enables the battery to have higher energy density and better thermal stability, and prolonged service life.

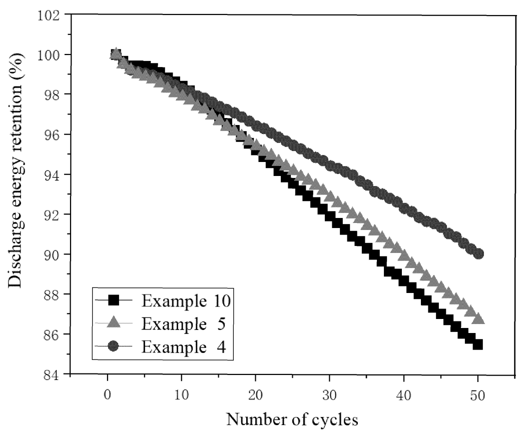


Fig. 6B

EP 4 113 660 A1

## Description

### TECHNICAL FIELD

The invention relates to a method for preparing inorganic materials, in particular to a method for preparing a material with composition gradient from inside to outside, and the application of the material as an electrode in battery.

### BACKGROUND

With the tremendous consumption of traditional energy and the increasingly serious problem of environmental pollution, it has become an urgent task for the development of sustainable economy to explore and develop new energy, accompanied by a huge demand for energy storage technology. As a new energy storage technology, lithium-ion battery is widely used in portable electronic equipment, electric vehicles and energy storage equipment thanks to its high energy density, long cycle life and good safety performance. In order to meet the growing demand for lithium-ion batteries of high energy density, the research of cathode materials has become a top priority. Known cathode materials include $LiCoO_2$, $LiNi_xCo_yMn_{(1-x-y)}O_2$, $LiNi_xCo_yAl_{(1-x-y)}O_2$, $xLi_2MnO_3 \cdot (1-x)LiMO_2$(M=Ni, Co and Mn, etc), $LiNi_{0.5}Mn_{1.5}O_4$ and $LiFePO_4$ etc. However, due to the limitation of its own chemical composition, the commonly used cathode materials are difficult to have high energy density and superior cycle performance and thermal stability as well, and vice versa.

With the rapid development of electric vehicles, cathode materials for lithium-ion battery with high energy density, good cycle life and high safety performance have increasingly become the focus of research. At present, the insiders in the industry are improving the performance of cathode materials by additional doping, coating or doping and coating at the same time. However, whichever of the above means has little improvement for the performance of the cathode material itself, and the improvement effect is very limited. At the same time, doping and coating involve additional production process steps, which will surely increase the production cost of cathode materials.

CN109119628A discloses a preparation method of doping modified high nickel ternary material. According to the method, a ternary material precursor is mixed with a lithium compound and a compound containing doped elements, in which the doped elements include alkali metal elements (Li or Na) and non-metallic elements (B, P, Si and S). The mixture is heated to a high temperature (650°C~1,000 °C) so that the doped elements diffuse into the material to form a uniformly doped ternary material. Doping can effectively reduce the mixing degree of Li+ and Ni2+ and enhance the structural stability of high nickel ternary materials, thus improve the electrochemical performance, magnification performance and cycle stability of high nickel ternary materials.

CN110649252A discloses a method for coating ternary materials. According to the invention, Li2Zr03 is coated on the surface of the ternary material with wet chemical method. While the lithium residue on the surface of the ternary material is reduced, Li2Zr03 will form a protective film on the surface of the ternary material, thus effectively reduce the side reaction between the electrolyte and the ternary cathode material, and then improve the interface stability and cycle stability of the ternary material.

CN108767221A discloses a method of coating titanium aluminum composite oxide on the surface of electrode material of lithium-ion battery by mechanical mixing and solid-phase synthesis. According to the method, the cathode material is first mixed with titanium aluminum oxide and then ball milled, and then sintered to obtain the modified material, which is used to improve its stability in electrolyte and improve the structural stability and cycle life of the material.

CN108807931A discloses a method for coating externally doped ternary materials. According to the method, a lithium aluminum silicate coating is formed on the surface of the ternary material by solid-state heat treatment, and the fluorine element is doped on the surface of the ternary material. The lithium aluminum silicate coating has good lithium-ion conductivity, and fluorine doping enhances the electronic conductivity of the ternary material. This synthesis method is conducive to improve the magnification performance and cycle stability of the ternary material.

The above technical scheme improves the performance of cathode materials to a certain extent by introducing new process steps, but it is difficult to greatly improve the performance of cathode materials, and the new process steps will increase the production cost of cathode materials. Only by changing the chemical composition of the cathode material itself can its electrochemical and physical properties be greatly improved. The known cathode materials have a single and constant chemical composition from the inside to the outside, but the core and surface of the cathode material experiences different physicochemical reactions in the real use state. The surface of the cathode material is in direct contact with the electrolyte. In the cycle process, the material surface is prone to structural instability and lead to phase transformation, which makes the cycle performance and thermal stability of the material worse. Therefore, the chemical composition design of the material surface should be more inclined to improve the stability of the material. On the contrary, because the cathode material is far away from the electrolyte, the internal chemical and physical reactions of the material are mild during the cycle. Therefore, in the process of material design, the internal composition design of the material should be more inclined to the setting of improving the energy density of the material. Obviously, a single chemical composition from the inside to the outside cannot achieve the superposition of the above properties. Patent US8,591,774B2 discloses a method for preparing precursors of cathode material by optimizing coprecipitation, so that the precursors of cathode material have composite chemical composition from the inside to the outside, and the concept of composition gradients is introduced at the same time. According to this concept, individual or all metal elements in the material are made to show a gradient change trend of composition, for example, the material can have a changing chemical composition from inside to outside. However, in the case of high-temperature sintering, metal elements will diffuse from high concentration to low concentration. Therefore, in the process of sintering, the precursor with composition gradient is likely to disappear due to improper control of sintering conditions, and finally form a cathode material with uniform composition from the inside to the outside. How to maintain the original components of the composition gradient precursor to the greatest extent during the sintering process is the technical core for the synthesis and preparation of cathode materials with composition gradient, and it is also an important technical means not provided by patent US8,591,774B2.

## SUMMARY

An objective of the invention is to provide a preparation method for cathode material of battery, so that the prepared intermediate material for the positive electrode of battery can still maintain the gradient change of metal element content after sintering.

Another objective of the invention is to provide a preparation method for cathode material of battery, so that the prepared material for positive electrode of battery has higher energy density.

Another objective of the invention is to provide a preparation method for cathode material of battery and prolong the service life of the material for positive electrode of battery.

Another objective of the invention is to provide a preparation method for cathode material of battery and improve the thermal stability of the material for positive electrode of battery.

The fifth objective of the invention is to provide a preparation method for cathode material of battery, which can greatly improve the performance of cathode material of battery only through coprecipitation and sintering processes.

The sixth objective of the invention is to provide a preparation method for cathode material of battery, reduce the dependence on pure oxygen atmosphere in material sintering and reduce the production cost of the material.

During the preparation of cathode material of battery, especially cathode material of lithium battery, it is usually necessary to make raw materials (such as metal compounds) into intermediate materials, and then obtain the material suitable for positive electrode of lithium battery through steps such as sintering. In the industry, these intermediate materials are also called "Precursors".

The material for the positive electrode of the battery obtained by using the precursors of the invention enables the battery to have higher energy density and thermal stability, and the service life is prolonged. In order to achieve the above objectives, it is very important to make precursors with composition gradient.

The invention is to effectively control the cathode material to form a precursor with arbitrary component gradient by establishing the function of feed rate and time of two metal salt solutions. That is, establish the function of the feed rate of coprecipitation metal salt solution with the change of coprecipitation time, so that the prepared precursor can form any form of composition gradient from inside to outside.

A preparation method for cathode material of battery, according to which, mix lithium source such as but not limited to lithium carbonate ($Li_2CO_3$), lithium nitrate (LiN03) or lithium hydroxide (LiOH) with the prepared precursor (e.g. molar ratio 1.01 - 1.1). Firstly raise from room temperature to 300°C~600°C at 2C/min~10C /min and maintain it. After sintering for 5~18 hours, cool it with the furnace. Then raise it from room temperature to 600°C~1200°C at 2C/min~10C/min and maintain it, and sinter for 5 -18 hours, and thus the material is obtained. The prepared material has the characteristics of composition gradient, such as the gradient from nickel rich to nickel poor from inside to outside, which is suitable for use as the positive electrode of battery.

Another preparation method for cathode material of battery, according to which, firstly prepare a precursor with the nominal composition shown in $Ni_{xC}o_{yM}n_{zMi^-x^-y^-z}(OH)_2$, in which M is a trace element, such as but not limited to Cr, Mg, Al, Ti, Zr, Zn, Ca, Nb and W; x, y and z are independently selected from any number from 0 to 1, and the sum of x, y and z is 0.8 - 1.0, such as but not limited to x = 0.8, y = 0.1, z = 0.1 and x = 0.8, y = 0, z = 0.15, etc. Here x, y and z refer to the nominal components of each element contained in the precursor, that is, the average content of each element in the whole precursor. However, the specific component distribution of the precursor from the inner core to the outer shell is different, which is a precursor with composition gradient.

The precursor has primary particles radiating from the inside to the outside, and the secondary particles composed of primary particles are spherical, with a particle size distribution D50 from 5 microns to 15 microns, showing the characteristics of composition gradient. From the surface to the inside of the particles, there is a gradient from nickel poor to nickel rich.

According to the invention, the sintering process is also controlled so as to prepare and synthesize a dense lithium-ion cathode material of battery while the composition gradient is maintained.

There are two metal salt solutions, that is, the first metal salt solution and the second metal salt solution, are different, and the metal salt is dissolved with water to form a solution. The common metal salts are formed by metal ions such as nickel, cobalt and manganese and $Cl^-$, $N0_3^-$ and $S0_4^{2-}$ ions. The solution contains one metal salt or several metal salts mixed in proportion. For example, nickel sulfate, cobalt sulfate and manganese sulfate are prepared into the first metal salt solution and the second metal salt solution in different proportions. The mixing proportion of various metal salts can be adjusted according to actual needs, and technical personnel in the industry are also familiar with this proportion.

In order to obtain multiphase materials, several metal salts are usually mixed, so the general formula $Ni_xCo_yMn_zM_{1-x-y-z}X$ is used as the nominal component, where x is $Cl^-$, $N0_3^-$ and $S0_4^{2-}$, etc. For example: $Ni_xCo_yMn_zM_{1-x-y-z}$ $SO_4$, $Ni_xCo_yMn_zM_{1-x-y-z}$ $(N0_3)_2$ and $Ni_xCo_yMn_zM_{1-x-y-z}$ Cl2, etc. Different types of salts are regarded as different metal salts. For example, $Ni_xCo_yMn_zM_{1-x-y-z}$ $SO_4$ and $Ni_xCo_yMn_zM_{1-x-y-z}$ $(N0_3)_2$ 2 are different salts. Although the types of salts are the same, but the composition is different, they should also be considered as different metal salts, such as $Ni_{0.8}Co_{0.1}Mn_{0.1}SO_4$ and $Ni_{0.8}Mn_{0.15}M_{0.05}$ $SO_4$, and these metal salts are applied to the invention alone or in combination.

Another method for preparing a material for the positive electrode of battery comprises the following steps:

Put the first metal salt solution in the container, then add the second metal salt solution to the first metal salt solution, synchronously, add the salt solution and ammonia in the container to the reactor for coprecipitation, and maintain pH9 -13 during the reaction to prepare the precursor.

Ammonia concentration is, such as 2mol/L~10mol/L.

The stirring rate of the reactor is, such as 800rpm~1300rpm. The temperature of the reaction liquid in the reactor is 35°C~75°C, and the atmosphere is protected by nitrogen (N2) or argon (Ar).

NaOH solution or KOH solution can be used, with a concentration from 2mol/L~10mol/L to maintain the pH in the reaction process, such as pH9~13.

After the prepared precursor is washed with water, put it in in an oven for heating and drying. It shall be under the protection of inert gas during heating, or be heated in vacuum. The heating temperature is such as but not limited to 60C~100C , and the time is such as but not limited to 6 hours -12 hours.

After mixing a lithium source such as but not limited to lithium carbonate ($Li_2CO3$), lithium nitrate (LiNO3) or lithium hydroxide (LiOH) with the prepared precursor (e.g. molar ratio 1.01 - 1.1), first raise from room temperature with 2°C /min~10C/min to 300°C~600°C and maintain it. After sintering for 5 ~ 18 hours, cool with the furnace, and then raise from room temperature with 2°C/min~10°C/min to 600°C~1200°C and maintain it. And after sintering for 5 ~ 18 hours, the material for the positive electrode of battery is thus prepared.

Sintering time is, such as but not limited to 5 hours - 12 hours or 12 hours - 18 hours.

The cathode material of battery prepared by the invention is used for manufacturing lithium-ion battery, specifically for the positive electrode of lithium-ion battery so as to improve energy density and thermal stability, prolong the service life of batteries, etc.

According to the method provided by the invention, the element composition of the solution in the container may be different at each time when it is added to the reactor. The solution at each time is the instant solution, and the composition of instant solution of each metal element can be calculated by the following formula I:

$$dC_{element}(t) = \frac{U_{M2}(t) \cdot C_{element-M2} \cdot dt + V_{M1} \cdot C_{element-M1} - \int_0^t U_{M1}(t) \cdot C_{element}(t)dt - U_{M1}(t) \cdot dC_{element}(t) \cdot dt}{V_{M1} - \int_0^t U_{M1}(t)\, dt} \quad \mathrm{I}$$

Wherein,

element refers to one of metal elements such as Ni, Co, Mn, Cr, Mg, Al, Ti, Zr, Zn, Ca, Nb and W;

M1 represents the solution in the container, such as the first metal salt solution, or the mixture formed by the first metal salt solution and the second metal salt solution. The technician can determine the specific composition according to the performance requirements of the cathode material;

M2 represents the second metal salt solution, which is determined by the technician according to the performance requirements of the cathode material;

$V_{M1}$ represents the initial volume of the first metal salt solution;

$V_{M2}$ represents the initial volume of the second metal salt solution;

$C_{element-M1}$ represents the initial concentration of this metal element contained in the first metal salt solution, which is determined according to the performance requirements of the cathode material, such as 0~ 4mol / L;

$C_{element-M2}$ represents the initial concentration of the metal element contained in the second metal salt solution, which is determined according to the performance requirements of the cathode material, such as 0- 4mol / L;

$U_{M1}(t)$ represents the feed rate of metal salt solution in the container to the reactor;

$U_{M2}(t)$ represents the feed rate of the second metal salt solution;

$C_{element}(t)$ represents the concentration of this metal element in the instant solution.
t represents the reaction time.

The total reaction time $T_{total}$ of coprecipitation will depend on the volumes $V_{M}$i,$V_{M2}$, the volume of the solutions and UMl(t), Where $T_{total}$ can be calculated from the following formula II:

$$\int_0^{T_{total}} U_{M1}(t)dt = V_{M1} + V_{M2} \quad \text{II}$$

The beneficial effect realized by the technical scheme of the invention: the method can realize the combination of various excellent properties of cathode material of lithium-ion battery containing composite chemical components by preparing it.

The beneficial effects of the invention are:

With the method provided by the invention not only the precursor material with metal composition gradient can be obtained, but also the characteristics of metal composition gradient in the sintered cathode material for battery can be maintained, so that the material has higher energy density and thermal stability, and the service life is significantly increased.

According to the method provided by the invention, coprecipitation method can be used to prepare the precursor with arbitrary component gradient, so as to meet the needs of manufacturing battery with higher energy density, thermal stability and longer service life.

The method provided by the invention can reduce the dependence on pure oxygen atmosphere in sintering of materials and reduce the production cost of materials.

## BRIEF DESCRIPTION OF THE DRAWINGS

Fig. 1 is a schematic diagram of a coprecipitation reaction device;
Fig. 2 is an XRD atlas of the precursor material for the positive electrode of battery prepared with the coprecipitation method in example 1, example 2 and example 3;
Fig. 3 is a SEM graph of the precursor material for the positive electrode of battery prepared with the coprecipitation method in example 1, example 2 and example 3, and an EDS metal element distribution line scanning graph of the cross section of the material particles;
Fig. 4 is an XRD atlas of the material for the positive electrode of battery prepared in example 4, example 5 and example 10;
Fig. 5 is a SEM graph of the material for the positive electrode of battery prepared in example 4 and example 5 and an EDS metal element distribution point scanning graph of cross section of the material particles;
Fig. 6A is a comparison of the charge/discharge curves of the materials for the positive electrode of battery prepared in example 4, example 5 and example 10;
Fig. 6B is a cyclic performance test graph of the material for the positive electrode of battery prepared in example 4, example 5 and example 10;
Fig. 7 is a DSC curve graph of the material for the positive electrode of battery prepared in example 6 and example 10;
Fig. 8 is an XRD atlas of the material for the positive electrode of battery prepared in example 6 and example 7;
Fig. 9 is a SEM graph of the material for the positive electrode of battery prepared in example 6 and example 7 and an EDS metal element distribution point scanning graph of the cross section of the material particles;
Fig. 10A is a charge /discharge curve graph of the material for the positive electrode of battery prepared in example 6 and example 7;
Fig. 10B is a cyclic performance test graph of the material for the positive electrode of battery prepared in example 6 and example 7;
Fig. 11 is an XRD atlas of the material for the positive electrode of battery prepared in example 8 and example 11;
Fig. 12A is a charge/discharge curve graph of the material for the positive electrode of battery prepared in example 8 and example 11;
Fig. 12B is a cyclic performance test graph of the material for the positive electrode of battery prepared in example 8 and example 11.

DETAILED DESCRIPTION

The technical scheme of the invention is described in detail below in combination with the accompanying figures. The examples of the invention are only used to elaborate the technical scheme of the invention rather than limiting it. Although the invention is described in detail with reference to the better examples, general technicians in this field should understand that the technical scheme of the invention can be modified or equivalently replaced without deviating from the spirit and scope of the technical scheme of the invention, and all of them shall be covered by the claims of the invention.

Fig. 1 is a schematic diagram of a coprecipitation reaction device for implementing the method of the present invention. As shown in Fig. 1, the first metal salt solution M1 is contained in the container 300, and the second metal salt solution M2 is added to the container 300 through the connected pipeline 100 and mix with the first metal salt solution M1. The solution in the container 300 is also synchronously added to the reactor 400 through the pipeline 200 and the complexing agent (2mol/L~10mol/L ammonia) for coprecipitation. The temperature of the reaction solution is 35°C~75°C, and nitrogen ($N_2$) is introduced into the reactor 400 as a protective atmosphere. pH is used to detect the reaction solution in the reactor 400, and the pH in the reaction process is kept at 9~13 by adding alkali solution (such as 2mol/L ~ 10mol/L NaOH solution or KOH solution).

The total reaction time of coprecipitation $T_{total}$ will depend on the volumes$V_{M1}$ and $V_{M2}$ of the two solutions and $U_{M1}(t)$, where $T_{total}$ can be calculated from the following formula II:

$$\int_0^{T_{total}} U_{M1}(t)dt = V_{M1} + V_{M2} \quad \text{II}$$

In this example, the volume of the reactor 400 is 5L, so the corresponding $V_{M1}$, $V_{M2}$and $U_{M1}(t)$ are 01- 1.5L, 01 - 1.5L and 0.01l/h-0.2l/h respectively, and the total reaction time $T_{total}$ is 5 hours-300 hours:

The test methods used in the following examples of the invention are specifically described as follows:

1) Structural characterization by X-ray diffraction (XRD)
The test equipment for X-ray diffraction is D2-XE-T. The target used for the instrument is copper target, and the X-ray wavelength is 1.5406 A. Firstly, weight 1g~2g sample, lay the samples in the center of the sample table as far as possible, and then use glass slides to smooth them to ensure that the samples are flush with the sample groove and that no sample is outside the groove. Finally, put the prepared sample table into Brooke D2-XE-T for test. The scanning range of X-ray 2θ is set to 10~80°, the scanning step to 0.01 °, and the X-ray exposure time of each step to 0.1s.

2) Morphological characterization by scanning electron microscopy (SEM)
First, bond a small amount of powder samples to the conductive tape of the sample table to ensure that the samples are evenly dispersed without agglomeration. Then, place the samples in the Joel JCM-7000 NeoScope desktop scanning electron microscope for observation. The element analysis of particle's cross section is carried out by Joel JED-2300 energy spectrometer (EDS) for data acquisition.

3) Electrochemical performance test
Mix the prepared cathode material of lithium-ion battery with conductive agent (such as carbon black), binder (such as polyvinylidene fluoride) and solvent (such as N-methylpyrrolidone) to prepare electrode slurry, then coat it on aluminum based current collector, dry it to prepare electrode, and assemble into coin cells. After that, cycle the coin cells first for 4 turns at 2.75-4.4V with a current of 0.1C, and then do cycle tests with a current of 0.5C in the same voltage range.

4) Thermal stability test

Firstly, cycle the prepared coin cells at 2.75-4.4V with a current of 0.1C for 2 cycles, then charge it to 4.4V and remove it for disassembly after constant voltage. Add the recovered positive electrode sheet and quantitative lithium-ion battery electrolyte into a sealed crucible and test by differential scanning calorimetry (DSC), with the heating rate of 5°C/min.

Example 1

Prepare the first metal sulfate solution 0.72L: prepare nickel sulfate, cobalt sulfate and manganese sulfate as per a molar ratio of 90:10:0 into 2mol/L sulfate solution and put it in a container. Prepare 0.18L second metal sulfate solution: prepare nickel sulfate, cobalt sulfate and manganese sulfate as per a molar ratio of 40:10:50) into 2mol/L sulfate solution.

Add 1.0L~1.5L mixture of deionized water and ammonia into the reactor, fill the reactor with nitrogen, adjust the rotating speed in the reactor to 800rpm~1300rpm, and set the temperature range of the reaction solution measured by the thermometer to 40°C~70°C .

Pump the second metal sulfate solution into the container at the rate of $U_{M2}(t)$ shown in formula III below and mix it with the first metal sulfate solution in the container, such as stirring at 250rpm.

$$U_{M2}(t) = \begin{cases} 0\ \mathrm{L/h}\ (0 < \mathrm{t} < 24\mathrm{h}) \\ 0.03\ \mathrm{L/h}\ (24\mathrm{h} < \mathrm{t} < 30\mathrm{h}) \end{cases} \quad \mathrm{III}$$

Synchronously, pump the solution in the container into the reactor at the rate of $U_{M1}(t)$=0.03L/h, pump 5mol/L ammonia into the reactor at the rate of UC(t)=0.01~0.04L/h, and keep the pH value of the solution at 9~13 with 4mol/L NaOH solution.

After the reaction is over, spherical particles with particle size distribution D50 ranging from 5 microns to 15 microns can be obtained. The nominal component of the prepared precursor is $Ni_{0.8}Co_{0.1}Mn_{0.1}(OH)_2$, and the composition gradient of the precursor from inside to outside is shown in Fig. 3. In Fig. 3, by observing the element analysis of the cross section of example 1, it can be seen that the material is an obvious core-shell structure. The inner composition of example 1 is rich in nickel and poor in manganese, while the outer shell composition of example 1 is rich in manganese and poor in nickel, and the component content of cobalt from the inner to the shell remains the same.

After washing the precursor with deionized water, put it into the oven for vacuum heating and drying. The oven temperature is set at 60C~100C, and the drying step can be completed after drying for 8-12 hours.

Example 2

Prepare the first metal sulfate solution 0.80L: prepare nickel sulfate, cobalt sulfate and manganese sulfate as per a molar ratio of 100:0:0 into 2mol/L sulfate solution and put it in a container. Prepare the second metal sulfate solution 0.343L: prepare nickel sulfate, cobalt sulfate and manganese sulfate as per a molar ratio of 1:1:1 into 2mol/L sulfate solution.

Add 1.0L~1.5L mixture of deionized water and ammonia into the reactor, fill the reactor with nitrogen, adjust the rotating speed in the reactor to 800rpm~1300rpm, and set the temperature range of the reaction solution measured by the thermometer to 40°C~70°C .

Pump the second metal sulfate solution into the container at the rate of $U_{M2}(t)$ shown in the following formula IV-1 and mix it with the first metal sulfate solution in the container, such as stirring at 250rpm.

$$U_{M2}(t) = \begin{cases} 0.006\ L/h\ (0 < t < 6h) \\ 0.015\ L/h\ (6h < t < 24h) \\ 0.006\ L/h\ (24h < t < 30h) \end{cases} \quad \mathrm{IV\text{-}1}$$

Synchronously, pump the solution in the container into the reactor at the rate of UM1(t) shown in IV-2 below, pump 5mol/L ammonia into the reactor at the rate of UC(t)=0.01-0.04L/h, and keep the pH value of the solution at 9~13 with 4mol/L NaOH solution.

$$U_{M1}(t) = \begin{cases} 0.08\ L/h\ (0 < t < 6h) \\ 0.03\ L/h\ (6h < t < 24h) \\ 0.02\ L/h\ (24h < t < 30h) \end{cases} \quad \mathrm{IV\text{-}2}$$

After the reaction is over, spherical particles with particle size distribution D50 ranging from 5 microns to 15 microns can be obtained. The nominal component of the prepared precursor is $Ni_{0.8}Co_{0.1}Mn_{0.1}(OH)_2$, and the composition gradient of the precursor from inside to outside is shown in Fig. 3. In Fig. 3, by observing the element analysis of the cross section of example 2, it can be seen that from the core to the shell, the component content of nickel changes from high to low, and the component content of cobalt and manganese changes from low to high.

After the precursor is washed with deionized water, heat and dry it in an oven protected by nitrogen. Set the oven temperature at 60°C~100°C,and the drying step can be completed after drying for 8 -12 hours.

Example 3

Prepare the first metal sulfate solution 0.6L: prepare nickel sulfate, cobalt sulfate and manganese sulfate as per a molar ratio of 100:0:0 into 2mol/L sulfate solution and put it in a container. Prepare the second metal sulfate solution 0.6L: prepare nickel sulfate, cobalt sulfate and manganese sulfate as per a molar ratio of 60:20:20 into 2mol/L sulfate solution.

Add 1.0L~1.5L mixture of deionized water and ammonia into the reactor, fill the reactor with nitrogen, adjust the rotating speed in the reactor to 800rpm~1300rpm, and set the temperature range of the reaction solution measured by the thermometer to 40°C~70°C .

Pump the second metal sulfate solution into the container at the rate of $U_{M2}(t)$=0.01~0.03L/h and mix it with the first metal sulfate solution in the container, such as stirring at the speed of 200rpm~3000rpm.

Synchronously, pump the solution in the container into the reactor at the rate of $U_{M1}(t)$=0.04~0.06L/h, pump 5mol/L ammonia into the reactor at the rate of Uc(t)=0.01~0.04L/h, and keep the pH value of the solution at 9~13 with 4mol/L NaOH solution.

After the reaction is over, spherical particles with a particle size distribution D50 of about 5 to 15 microns can be obtained. The nominal component of the prepared precursor is $Ni_{0.8}Co_{0.1}Mn_{0.1}(OH)_2$, and the composition gradient of the precursor from inside to outside is shown in Fig. 3. In Fig. 3, by observing the element analysis of the cross section of example 3, it can be seen that from the core to the shell, the component content of nickel changes from high to low, and the component content of cobalt and manganese changes from low to high.

After the precursor is washed with deionized water, heat and dry it in an oven filled with nitrogen. The oven temperature is set at 60°C~100°C,and the drying step can be completed after drying for 8 ~ 12 hours.

Example 4

Mix a lithium source $Li_2C0_3$ or LiOH with the precursor prepared in example 1 as per a molar ratio of 1.01 to 1.1. Put the mixture into an oxygen protected furnace and sinter for 12-18 hours, in which the temperature in the furnace is set to 700°C~1,000°C.

Characterize the sintered samples by SEM and XRD, and test the electrochemical properties of the sintered and prepared cathode materials.

Example 5

Mix a lithium source $Li_2CO_3$ or LiOH with the precursor prepared in example 2 as per a molar ratio of 1.01 ~ 1.1. Put the mixture into an oxygen protected furnace and sinter for 12~18 hours, in which the temperature in the furnace is set to 700°C~1,000°C.

Characterize the sintered samples by SEM and XRD, and test the electrochemical properties of the sintered and prepared cathode materials.

Example 6

Mix the lithium source $Li_2CO_3$ or LiOH with the precursor prepared in example 3 as per a molar ratio of 1.01 ~ 1.1. Put the mixture into an oxygen protected furnace and sinter for 12~18 hours, in which the temperature in the furnace is set to 700°C~1,000°C.

Characterize the sintered samples by SEM and XRD, and test the electrochemical properties of the sintered and prepared cathode materials.

Example 7

Mix a lithium source $Li_2CO_3$ or LiOH with the precursor prepared in example 3 as per a molar ratio of 1.01 ~ 1.1.

Put the mixture into an oxygen protected furnace, raise the temperature 300°C~600 at 2°C/min~10°C/min and maintain it. After sintering for 12~18 hours, cool it with the furnace, put the cooled sample into a shaking machine and mix for 1~5 hours. Then, put it into an oxygen protected furnace, raise it to 700°C~1,000°C from room temperature at 2°C/min~10°C/min and maintain it, sinter it for 12~18 hours, and obtain the sintered cathode material sample cooling with the furnace.

Characterize the sintered samples by SEM and XRD, and test the electrochemical properties of the sintered and prepared cathode materials.

Example 8

Mix a lithium source $Li_2CO_3$ or LiOH with the precursor prepared in example 1 as per a molar ratio of 1.01 to 1.1.

Put the mixture into an air protected furnace, raise the temperature to 300 °C ~600°C from room temperature at 2 °C /min-10 °C /min and maintain it. After sintering for 12~18 hours, cool it with the furnace, put the cooled sample into a shaking machine for mixing for 1~5 hours. Then, put it into an air protected furnace, raise the temperature to 700°C~1000°Cfrom room temperature at 2°C/min~10°C/min and maintain it, sinter for 12~18 hours, and obtain sintered cathode material samples cooling with the furnace.

Characterize the sintered samples by SEM and XRD, and test the electrochemical properties of the sintered and prepared cathode materials.

Example 9

(1) First prepare 1L of 2mol/L M1 metal salt solution, and then 1L of 2mol/L M2 metal salt solution. See Table 1 for the specific components of M1 and M2 solutions.

(2) Then prepare 2mol/L~4mol/L NaOH solution and 2mol/L~5mol/L ammonia solution.

(3) Add 1L-1.5L mixture of deionized water and ammonia into a 5L reactor, and fill the reactor with nitrogen to maintain an oxygen free environment. Adjust the rotating speed in the reactor to 900rpm ~ 1300rpm, set the solution temperature in the reactor to 40°C~70°C, and keep the pH value of the solution to 9~13.

(4) Pump M2 solution into M1 solution at the rate of $U_{M2}(t)$, add a rotor to M1 solution, and set its speed to 200rpm ~ 600rpm to keep the composition of M1 solution uniform all the time. At the same time, pump M1 solution into the reactor at the rate of $U_{M1}(t)$. See Table 1 for the specific rate settings of UM1(t) and UM2(t).

(5) At the same time, pump the ammonia water into the reactor at the speed of Uc (t) and pump the corresponding NaOH to ensure that the pH value in the reactor is 9~13. See Table 1 for the specific rate setting of Uc(t).

(6) After the reaction is over, spherical particles with a particle size distribution D50 of about 5 microns to 15 microns can be obtained.

(7) Wash the precursor prepared by the above method with deionized water to recover the precursor.

(8) Put the washed precursor into a nitrogen protected oven for heating and drying. Set the oven temperature to 60°C~100°C, and the drying step can be completed after drying for 8 ~ 12 hours.

(9) Mix the lithium source $Li_2CO_3$ or LiOH with the precursor as per a molar ratio of 1.01 ~ 1.1. Put the mixture into an oxygen protected furnace, raise it to 300°C~600°C from room temperature at 2~10°C/min and maintain it. After sintering for 12~18 hours, cool it with the furnace, and then put the cooled sample into a shaking machine for mixing for 1~5 hours. After that, put it into an oxygen protected furnace, raise it to 700°C~1,000 from room temperature at 2°C/min~10°C/min and maintain it, sinter it for 12~18 hours, and obtain the sintered cathode material sample cooling with the furnace.

Table 1

| No. of sample | Preparation condition for precursor | | | | | Li/TM molar ratio | Sintering condition for cathode material |
|---|---|---|---|---|---|---|---|
| | Component of M1 solution | Component of M2 solution | Flow rate design of varioussolutions | | | | |
| | | | Flow rate of M1 solution, L/h | Flow rate of M2 solution , L/h | Flow rate of ammonia solution, L/h | | |
| 1 | $Ni_{0.80}Co_{0.20}SO_4$ | $Ni_{0.40}CO_{0.2}Mn_{0.40}SO_4$ | 0.03 | 0.015 | 0.03 | 1.0 5 | 1)600°C 10h 2)800°C 12h |
| 2 | $Ni_{0.95}Co_{0.05}Cl_2$ | $Ni_{0.75}Co_{0.15}Al_{0.10}Cl_2$ | 0.03 | 0.015 | 0.03 | 1.0 5 | 1)500°C 10h 2)850°C 12h |
| 3 | $Ni_{0.95}Co_{0.05}SO_4$ | $Ni_{0.75}Co_{0.15}Ti_{0.10}SO_4$ | 0.03 | 0.015 | 0.03 | 1.0 5 | 1)500°C 10h 2)750°C 15h |
| 4 | $Ni_{0.90}Co_{0.10}SO_4$ | $Ni_{0.70}Co_{0.20}Mg_{0.1}SO_4$ | 0.03 | 0.015 | 0.03 | 1.0 5 | 1)500°C 10h 2)800°C 15h |
| 5 | $Ni_{0.90}Co_{0.10}(NO_3)_2$ | $Ni_{0.75}Co_{0.15}Fe_{0.10}(NO_3)_2$ | 0.03 | 0.015 | 0.03 | 1.0 5 | 1)500°C 10h 2)800°C 15h |
| 6 | $Ni_{0.90}Mn_{0.10}(NO_3)_2$ | $Ni_{0.75}Mn_{0.15}Fe_{0.10}(NO_3)_2$ | 0.03 | 0.015 | 0.03 | 1.0 5 | 1)500°C 10h 2)800°C 15h |

(continued)

| No. of sample | Preparation condition for precursor | | | | | Li/TM molar ratio | Sintering condition for cathode material |
|---|---|---|---|---|---|---|---|
| | Component of M1 solution | Component of M2 solution | Flow rate design of varioussolutions | | | | |
| | | | Flow rate of M1 solution, L/h | Flow rate of M2 solution , L/h | Flow rate of ammonia solution, L/h | | |
| 7 | $Ni_{0.90}Mn_{0.10}SO_4$ | $Ni_{0.7}Mn_{0.20}Mg_{0.10}SO_4$ | 0.03 | 0.015 | 0.03 | 1.0 5 | 1)500°C 10h<br>2)800°C 15h |
| Note: "1)" indicates the temperature and time of the first sintering; "2)" indicates the temperature and time of the second sintering. | | | | | | | |

Example 10

(1) Firstly, prepare 2L metal salt solution. Prepare nickel sulfate, cobalt sulfate and manganese sulfate as per a molar ratio of 80:10 :10 into 2mol/L sulfate solution, and 2mol/L~ 4mol/L NaOH solution and 2mol/L ~ 5mol/L ammonia solution.

(2) Add 1L ~ 1.5L mixture of deionized water and ammonia into a 5L reactor, and fill the reactor with nitrogen to maintain an oxygen free environment. Adjust the rotating speed in the reactor to 900-1300rpm, and set the solution temperature in the reactor from 40°C~70°C.

(3) Pump the metal salt solution into the reactor at the rate of 0.04L/h~ 0.06L/h, pump the ammonia solution into the reactor at the rate of 0.01-0.04L/h, and use NaOH solution to ensure that the pH value in the reactor is maintained from 9~13, and maintain the coprecipitation reaction until the metal salt solution is used up. After the reaction is over, spherical particles with a particle size distribution D50 of about 5 microns to 15 microns can be obtained, and the precursor is $Ni_{0.8}Co_{0.1}Mn_{0.1}(OH)_2$ with uniform composition from inside to outside.

(4) Wash the precursor prepared with deionized water with the above method to recover the precursor.

(5) Put the washed precursor into a nitrogen protected oven for heating and drying. Set the oven temperature to 60°C~100°C, and the drying step can be completed after drying for 8 ~ 12 hours.

(6) Mix a lithium source $Li_2CO_3$ or LiOH with the precursor as per a molar ratio of 1.01 ~ 1.1. Put the mixture into an oxygen protected furnace for sintering for 12~18 hours, with the temperature in the furnace set to 700°C~1,000°C. After sintering, ternary cathode material of $LiNi_{0.8}Co_{0.1}Mn_{0.1}O_2$ with uniform internal and external components can be obtained.

(7) Test the electrochemical cycle life of the cathode material.

Example 11

Repeat steps (1) to (5) in example 10.

(6) Mix a lithium source $Li_2CO_3$ or LiOH with the precursor as per a molar ratio of 1.01 ~ 1.1. Put the mixture into a furnace with air atmosphere and sinter for 12~18 hours, with the temperature in the furnace set to 700°C~1,000°C. After sintering, ternary cathode material of $LiNi_{0.8}Co_{0.1}Mn_{0.1}O_2$ with uniform internal and external components can be obtained.

(7) Test the electrochemical cycle life of the cathode material.

It can be seen from the above examples that the three precursor samples prepared by coprecipitation reaction in examples 1, 2 and 3 are characterized by XRD It can be seen that the three precursors are pure M $(OH)_2$ (M is a metal element) and there is no impurity phase (see Fig. 2 for details). The particle size of the prepared precursors is about 10μm. According to the analysis of metal elements in the cross section of the precursor by EDS, the three precursor particles have different composition gradients from the inside to the outside (see Fig. 3 for details).

In example 4 and example 5, each precursor prepared in example 1 and example 2 is mixed with a lithium source and sintered at high temperature to obtain a cathode material of battery with different composition gradient, with a nominal component of $LiNi_{0.8}Co_{0.1}Mn_{0.1}O_2$. Example 10 with a unified composition from the inside out is also prepared as a comparison, and its component is $LiNi_{0.8}Co_{0.1}Mn_{0.1}O_2$. It can be seen from XRD characterization that example 4, example 5 and example 10 are characterized as pure R-3m layered structure without any impurity phase (see Fig. 4 for details). Therefore, it can be seen that even various materials used for the positive electrode of battery with composition gradient also have a pure R-3m layered structure.

The element analysis of the cross section of the two materials for the positive electrode of battery prepared in examples 4 and 5 shows that the two materials maintain the composition gradient of the corresponding precursors, which is manifested in that the inner part of the particle is nickel rich phase and the outer layer of the particle is manganese rich phase (see Fig. 5 for details). Meanwhile, the primary particles of examples 4 and 5 are shown to grow radially from the center to the outer layer, which is characterized by the morphological characteristics of the composition gradient material.

The materials for the positive electrode of battery prepared in example 4, example 5 and example 10 are tested for charge/discharge curve comparison and cycle performance comparison. Example 4 and example 5 had similar unit discharge/ capacity compared with example 10 (see Fig. 6A for details). With the same nominal component of $LiNi_{0.8}Co_{0.1}Mn_{0.1}O_2$, the cycle life of the three materials for the positive electrode of battery with composition gradient characteristics is better than that of example 10 (see Fig. 6B for details). As can be seen from Fig. 6B, the cycle life of example 4 is the best. After 50 cycles, the discharge energy retention rate can reach 90%. In contrast, the discharge capacity retention rate of example 10 is 85.5% after 50 cycles. It can be seen that the cycle life of cathode materials with composition gradient can be greatly improved compared with cathode materials with uniform composition.

Furnishing a composition gradient to the cathode material of battery is more conducive to improve the thermal stability of the cathode material. Therefore, the thermal stability of example 6 ($LiNi_{0.8}Co_{0.1}Mn_{0.1}O_2$ with composition gradient prepared by mixing the precursor prepared in example 3 with lithium source for one-step sintering) and example 10 ($LiNi_{0.8}Co_{0.1}Mn_{0.1}O_2$ with unified composition from the inside to the outside) were studied. As shown in Fig. 7, compared with example 10, example 6 has a higher thermal decomposition temperature and less heat released in the whole heat release process, so example 6 has better thermal stability. Under the condition of maintaining the same nominal composition, the safety performance of cathode materials can be greatly improved by changing the composition gradient from inside to outside.

To maintain the composition gradient designed in the synthesis process of precursor will play a vital role in optimizing the cycle and safety performance of cathode materials. The process from precursor preparation to obtain the final cathode material for battery must undergo high-temperature sintering, but high-temperature sintering will lead to the diffusion of metal elements, so the solubility gradient of the precursor will disappear due to improper sintering process. Therefore, how to optimize the sintering process is very important for the preparation of ternary materials with composition gradient. In example 7, the precursor prepared in example 3 is also used to mix with lithium source for two-step sintering. As shown in Fig. 8, both the material prepared in example 6 and the material prepared in example 7 show a pure R-3m layered structure without any impurity phase. However, the internal appearance and element distribution of the two are very different. As shown in Fig. 9, the material prepared in example 6 shows a partial hollow phenomenon in the center, and the content of nickel element changes from the center to the outer layer, specifically from $80.33\% \pm 1.24\%$ to $74.2\% \pm 1.31\%$, showing no significant gradient change. In example 7, there was no hollow phenomenon, and the content of nickel changed from $80.19\% \pm 1.22\%$ to $69.53\% \pm 1.22\%$, showing a significant gradient change. Therefore, the material for the positive electrode of battery prepared by two-step sintering (i.e. example 7) is a more dense material and maintains the characteristics of the component gradient in the precursor. The electrochemical properties of example 6 and example 7 are shown in Fig. 10A and Fig. 10B. Both have similar unit discharge capacity, but the material prepared in example 7 shows a better cycle life. Therefore, the materials prepared by two-step sintering better retain the characteristics of component gradient, and can obtain a better cycle life as the positive electrode of battery. If the composition gradient characteristics of the precursor are retained during material preparation, the focus of the sintering process is to introduce low-temperature and high-temperature sintering means, so that it is easier to prepare materials with large composition gradient, compactness and long cycle life, which are applied to the positive electrode of battery, especially the positive electrode of lithium-ion battery.

The sintering of nickel rich cathode materials usually needs to be carried out in a pure oxygen atmosphere to ensure that nickel elements will not be reduced to $Ni^{2+}$ ions in the sintering process, and enter the lithium-ion layer and cause mixed discharge of lithium and nickel, resulting in reduced discharge capacity of the materials. The application of pure oxygen sintering also greatly increases the production cost of high nickel materials. High nickel solubility gradient materials with the same nominal composition can form nickel rich core and nickel poor shell due to the particularity of design, which greatly reduces the dependence on pure oxygen sintering atmosphere in the sintering process. In example 8, the precursor with nominal component of $Ni_{0.8}Co_{0.1}Mn_{0.1}(OH)_2$ prepared in example 1 is used, which is prepared by using two-step sintering in an air atmosphere. In example 11, the precursor with nominal component of $Ni_{0.8}Co_{0.1}Mn_{0.1}(OH)_2$ with uniform composition from the inside to the outside is used, which is prepared by using one-step sintering in an air atmosphere. As shown in Fig. 11, the two materials prepared in example 8 and example 11 show a pure R-3m layered structure without any impurity phase. As shown in Fig. 12A and 12B, example 8 has a similar unit discharge capacity as example 11, but example 8 with composition gradient characteristics has a longer cycle life than example 11. Therefore, compared with the material with uniform composition, the material with composition gradient can reduce the dependence on pure oxygen atmosphere in the sintering process and greatly reduce the production cost of the material.

## Claims

1. A method for preparing a material for a positive electrode of battery, **characterized in that** the method for preparing the material for the positive electrode of battery comprises the following steps:

   after mixing the lithium source with the prepared precursor, firstly raise from room temperature to 300 °C~ 600 °C at 2°C/min~10°C/min and maintain it, then sinter for 5~18 hours, cool with the furnace, then raise from room temperature to 600 °C~ 1200 °C at 2°C/min~10°C/min and maintain it, and then sintered for 5 ~ 18 hours, and the material is thus obtained,
   the said lithium source is selected from one or more of lithium carbonate, lithium nitrate and lithium hydroxide;
   the said precursor has composition gradient characteristics.

2. The preparation method of the material for the positive electrode of battery according to claim 1, **characterized in that** the lithium source is blended with the precursor as per a molar ratio of 1.01 ~ 1.1.

3. The preparation method of the material for the positive electrode of battery according to claim 1, **characterized in that** the said material has composition gradient characteristics.

4. The preparation method of the material for the positive electrode of battery according to claim 3, **characterized in that** the said material presents a nickel rich to nickel poor gradient from the inside to the outside.

5. The preparation method of the material for the positive electrode of battery according to claim 1, **characterized in that** the said precursor with the nominal composition shown in $Ni_xCo_yMn_zM_{1-x-y-z}(OH)_2$ is prepared first, where M is trace element; x, y and z are independently selected from any number from 0 to 1, and the sum of x, y and z is 0.8 ~ 1.0.

6. The preparation method of the material for the positive electrode of battery according to claim 5, **characterized in that** the said trace elements Cr, Mg, Al, Ti, Zr, Zn, CA, Nb and W.

7. The method for preparing the material for the positive electrode of battery according to claim 5, **characterized in that** the said precursor has primary particles radiating from the inside to the outside.

8. The preparation method of the material for the positive electrode of battery according to claim 7, **characterized in that** the primary particles present a gradient from poor nickel to rich nickel from the outside to the inside.

9. The method for preparing the material for the positive electrode of battery according to claim 5, **characterized in that** the particle size distribution D50 of the said precursor is 5 microns to 15 microns.

10. The method for preparing the material for the positive electrode of battery according to claim 5, **characterized in that** a method for preparing the precursor comprises:

    put the first metal salt solution in the container, then add the second metal salt solution to the said first metal salt solution, synchronously, add the solution and ammonia in the said container to the reactor for coprecipitation, and maintain pH 9 -13 during the reaction, and the precursor is thus prepared;
    the total reaction time $T_{total}$ of the said coprecipitation can be calculated from the following formula II:

$$\int_0^{T_{total}} U_{M1}(t)dt = V_{M1} + V_{M2} \quad \text{II}$$

    wherein,

    $V_{M1}$ represents the initial volume of the first metal salt solution;
    $V_{M2}$ represents the initial volume of the second metal salt solution;

$U_{M1}(t)$ represents the feed rate of metal salt solution in the container to the reactor;
t represents the reaction time.

**11.** The preparation method of the material for the positive electrode of battery according to claim 10, **characterized in that** the instant solution composition of each element when the solution in the said container is added to the reactor can be calculated by the following formula I:

$$dC_{element}(t) = \frac{U_{M2}(t) \cdot C_{element-M2} \cdot dt + V_{M1} \cdot C_{element-M1} - \int_0^t U_{M1}(t) \cdot C_{element}(t)dt - U_{M1}(t) \cdot dC_{element}(t) \cdot dt}{V_{M1} - \int_0^t U_{M1}(t)\, dt} \quad \text{I}$$

wherein, element represents one of the metal elements Ni, Co, Mn, Cr, Mg, Al, Ti, Zr, Zn, Ca, Nb and W;
$C_{element-M1}$ represents the initial concentration of such metal element contained in the first metal salt solution;
$C_{element-M2}$ represents the initial concentration of such metal element contained in the second metal salt solution;
$U_{M2}(t)$ represents the feed rate of the second metal salt solution;
$C_{element}(t)$ represents the concentration of this metal element in the instant solution.

**12.** The method for preparing the material for the positive electrode of battery according to claim 10, **characterized in that** the stirring rate of the said reactor is 800rpm~1,300rpm.

**13.** The method for preparing the material for the positive electrode of battery according to claim 10, **characterized in that** the temperature of the reaction liquid in the said reactor is 35°C~75°C.

**14.** The method for preparing the material for the positive electrode of battery according to claim 10, **characterized in that** the said reactor is protected by nitrogen or argon.

**15.** The preparation method of the material for the positive electrode of battery according to claim 1, wherein the application in battery manufacturing.

**16.** A material, **characterized in that** it is obtained by the preparation method of claim 1 and is used for the positive electrode of battery.

**17.** A battery, **characterized in that** it comprises a positive material, which is obtained by the preparation method in claim 1.

**18.** The battery according to claim 17, **characterized in that** the said battery is a lithium-ion battery.

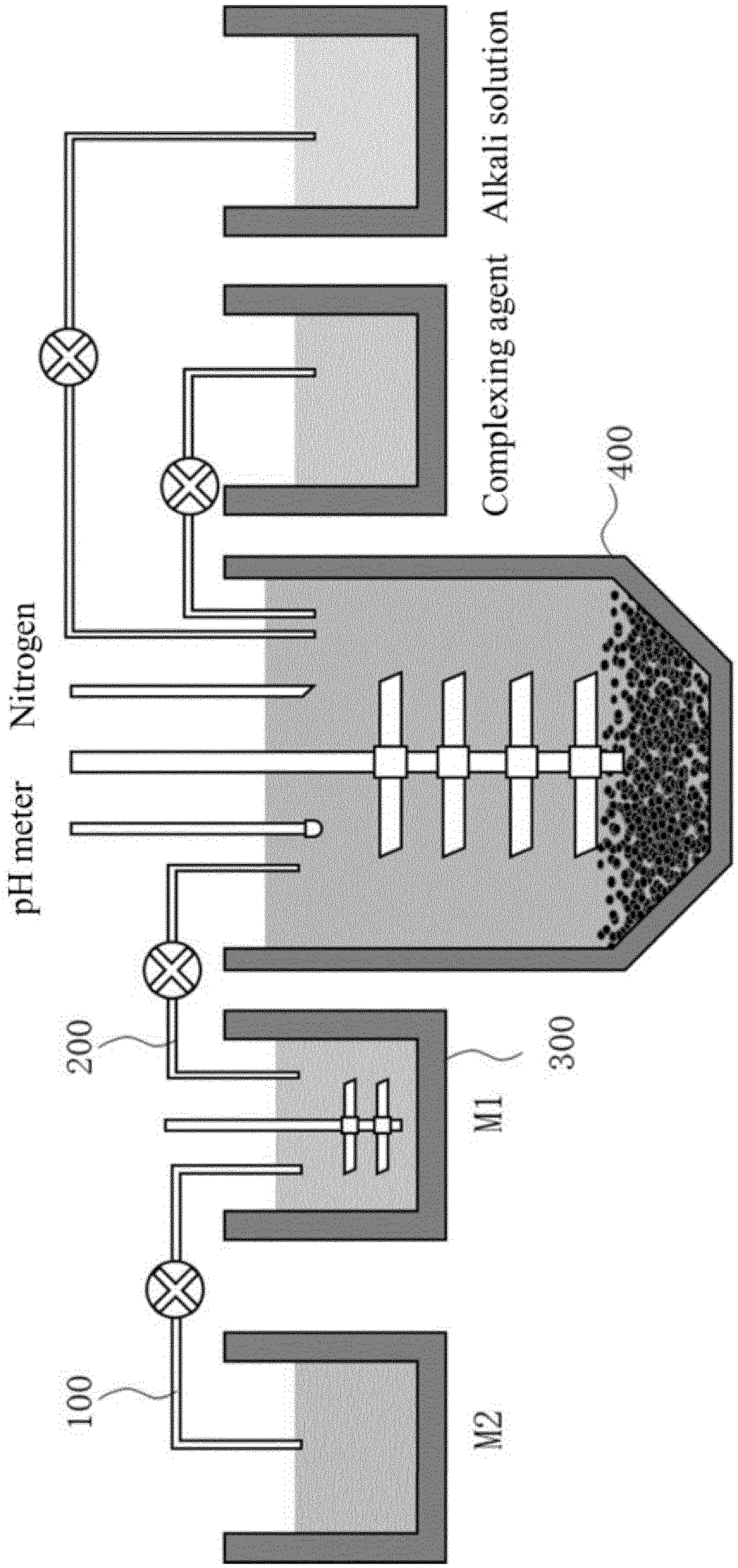
pH meter
Nitrogen
Complexing agent
Alkali solution
400
200
300
100
M1
M2

Fig. 1

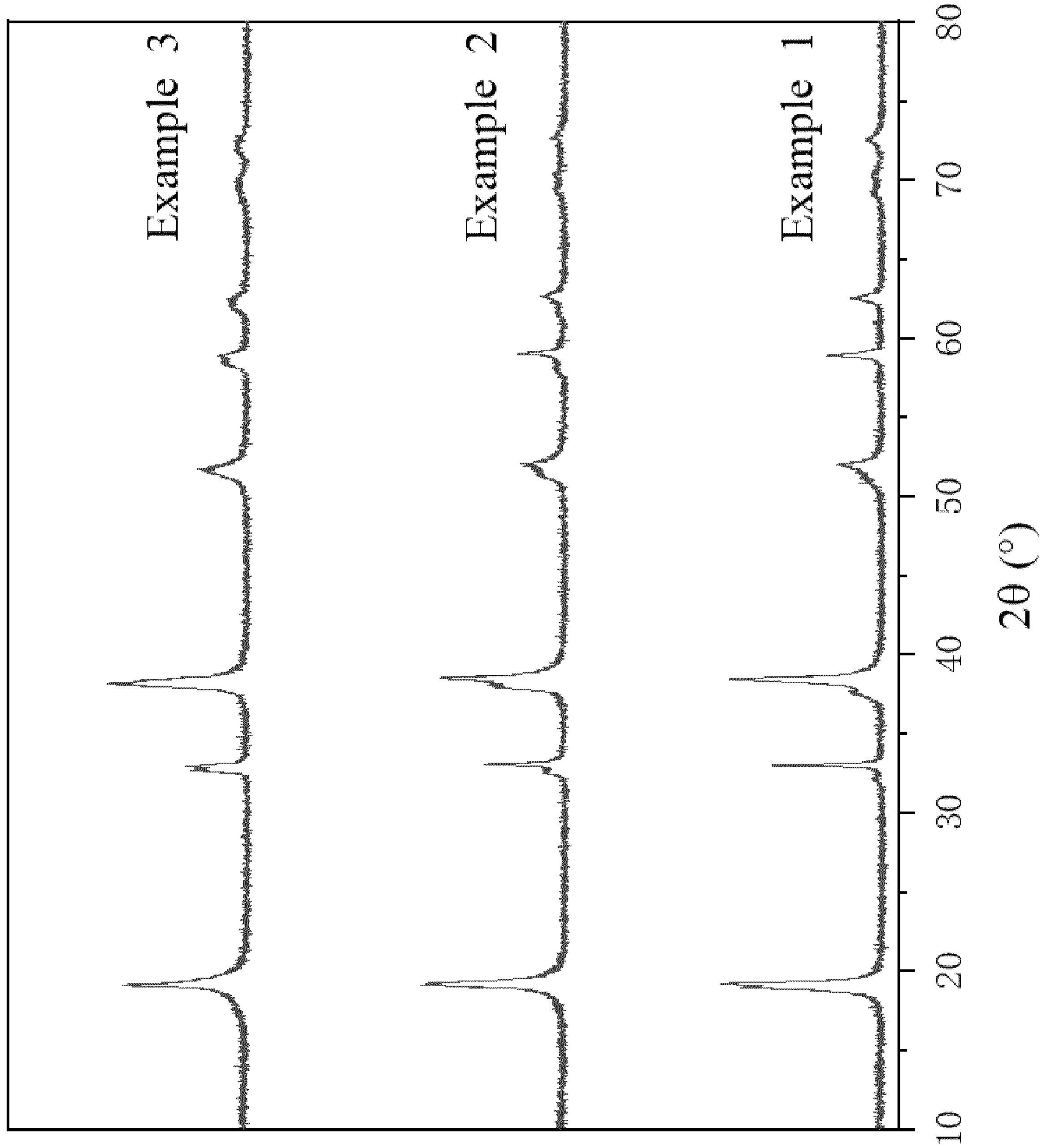
Example 3
Example 2
Example 1
10
20
30
40
50
60
70
80
2θ (°)
Intensity (a.u.)

Fig. 2

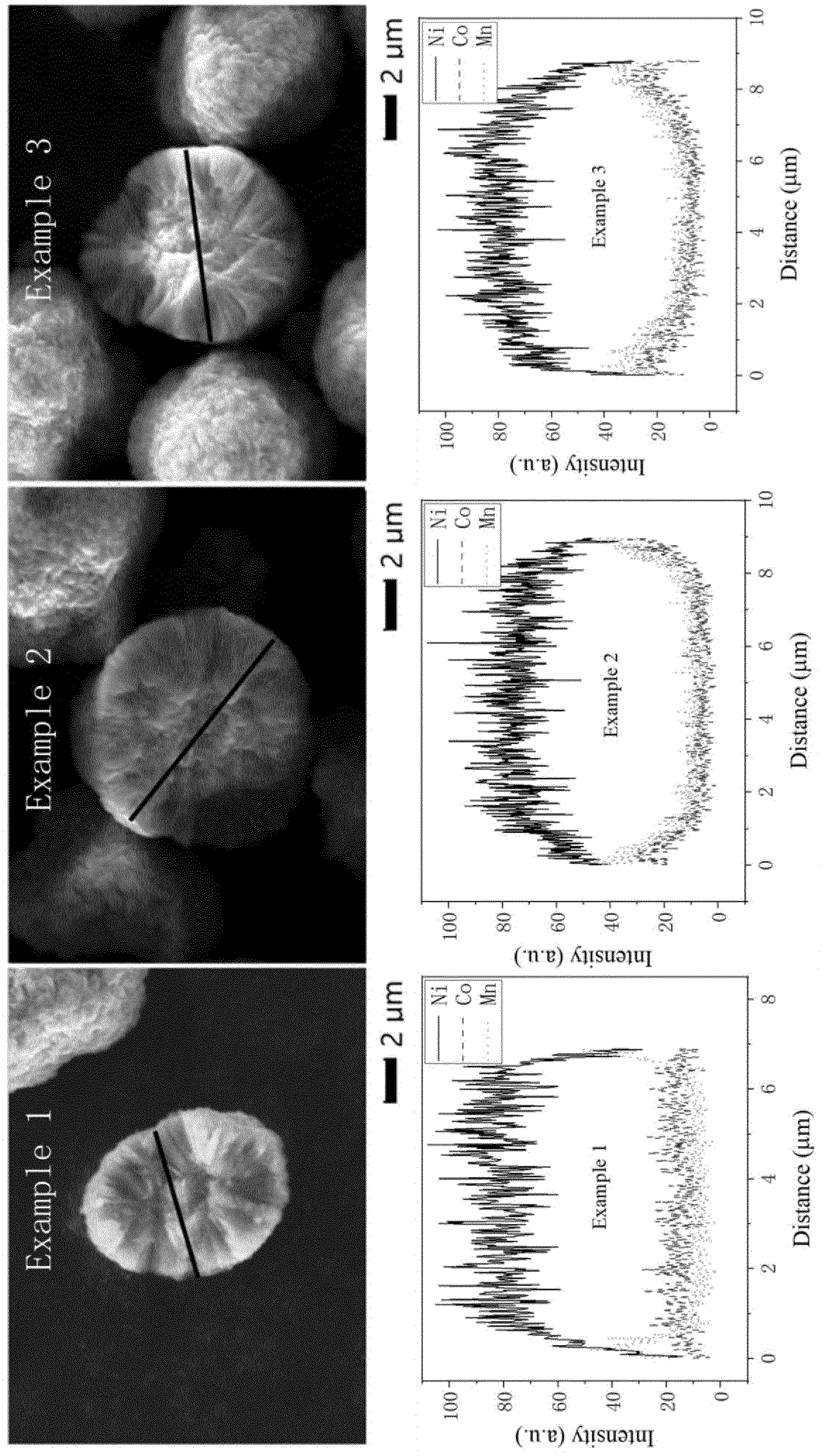
Example 1
Example 2
Example 3
2 µm
Ni
Co
Mn
Intensity (a.u.)
Distance (µm)

Fig. 3

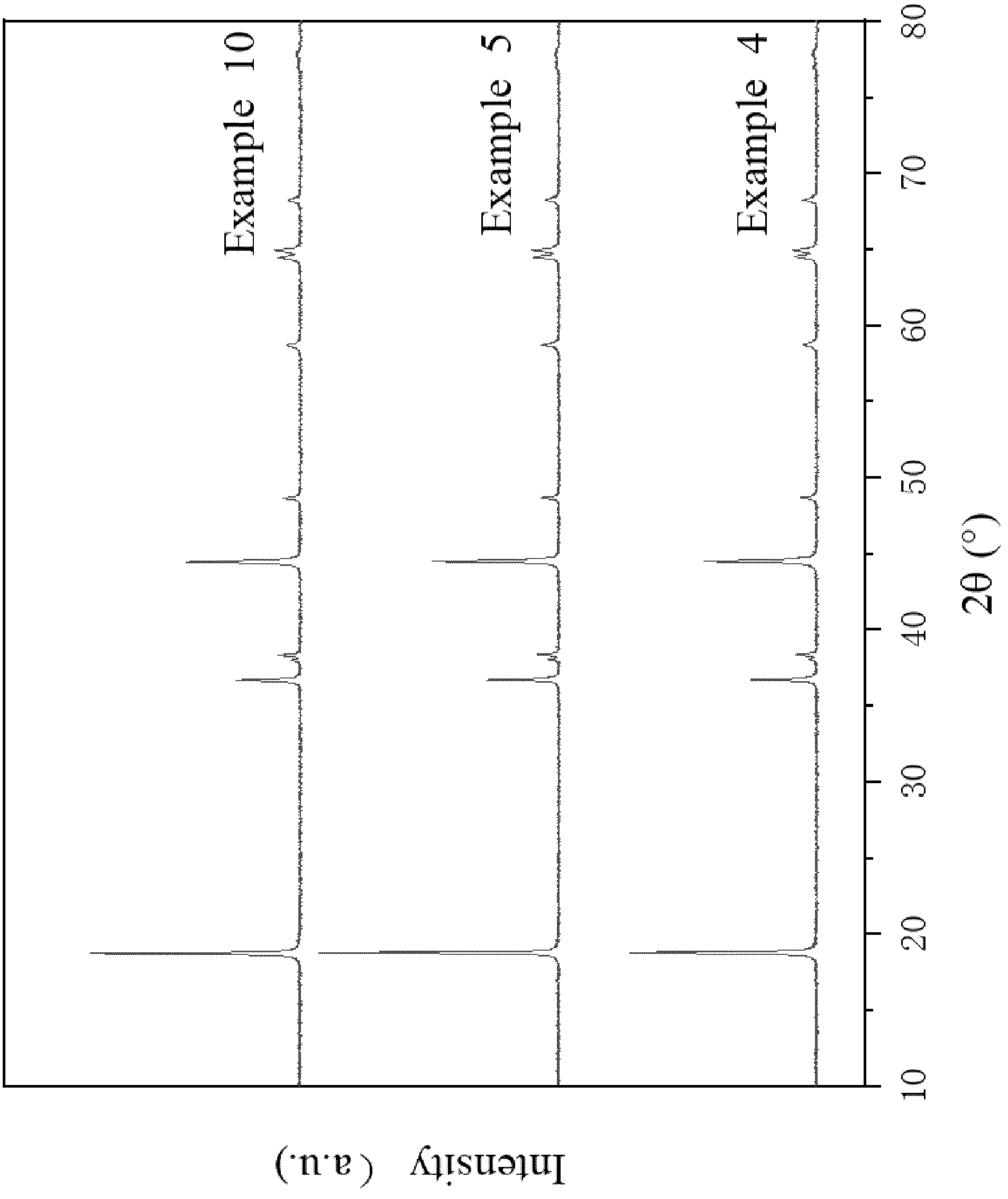
Example 10
Example 5
Example 4
Intensity (a.u.)
10
20
30
40
50
60
70
80
2θ (°)

Fig. 4

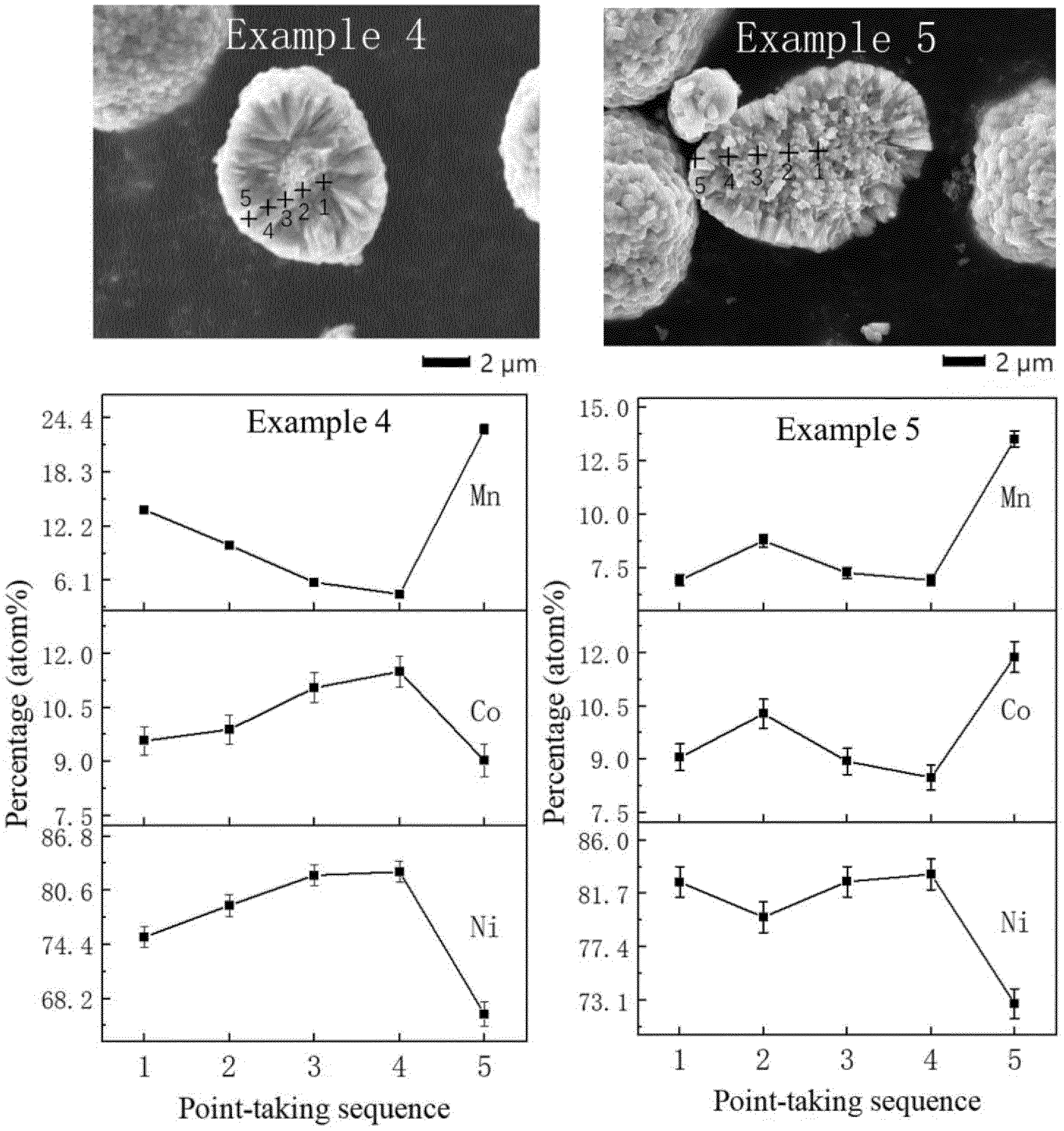
Example 4
5
4
3
2
1
2 μm
Example 5
5
4
3
2
1
2 μm
Example 4
24. 4
18. 3
12. 2
6. 1
Mn
12. 0
10. 5
9. 0
7. 5
Co
86. 8
80. 6
74. 4
68. 2
Ni
Percentage (atom%)
1
2
3
4
5
Point-taking sequence
Example 5
15. 0
12. 5
10. 0
7. 5
Mn
12. 0
10. 5
9. 0
7. 5
Co
86. 0
81. 7
77. 4
73. 1
Ni
Percentage (atom%)
Point-taking sequence

Fig. 5

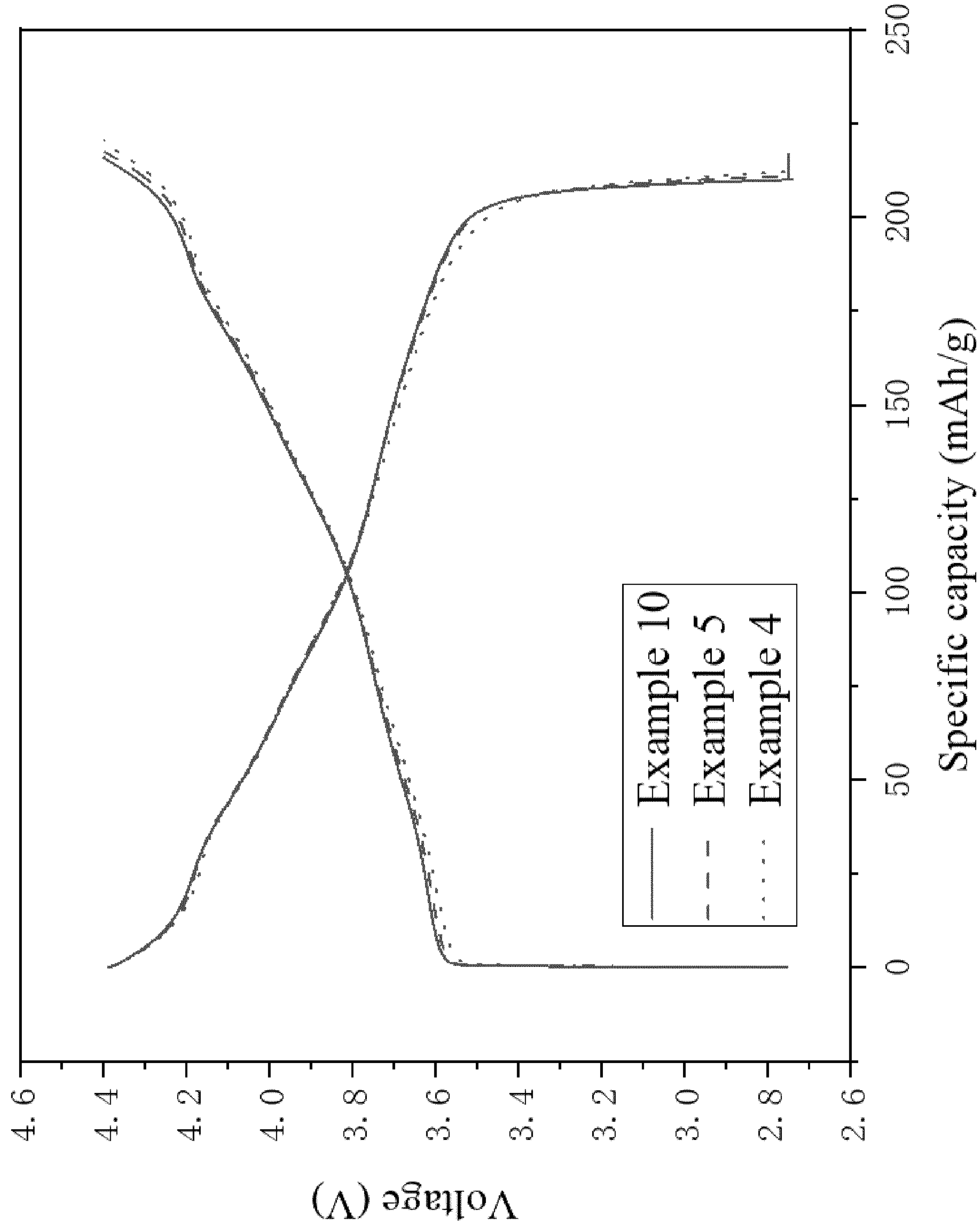
Example 10
Example 5
Example 4
Voltage (V)
Specific capacity (mAh/g)
4.6
4.4
4.2
4.0
3.8
3.6
3.4
3.2
3.0
2.8
2.6
0
50
100
150
200
250

Fig. 6A

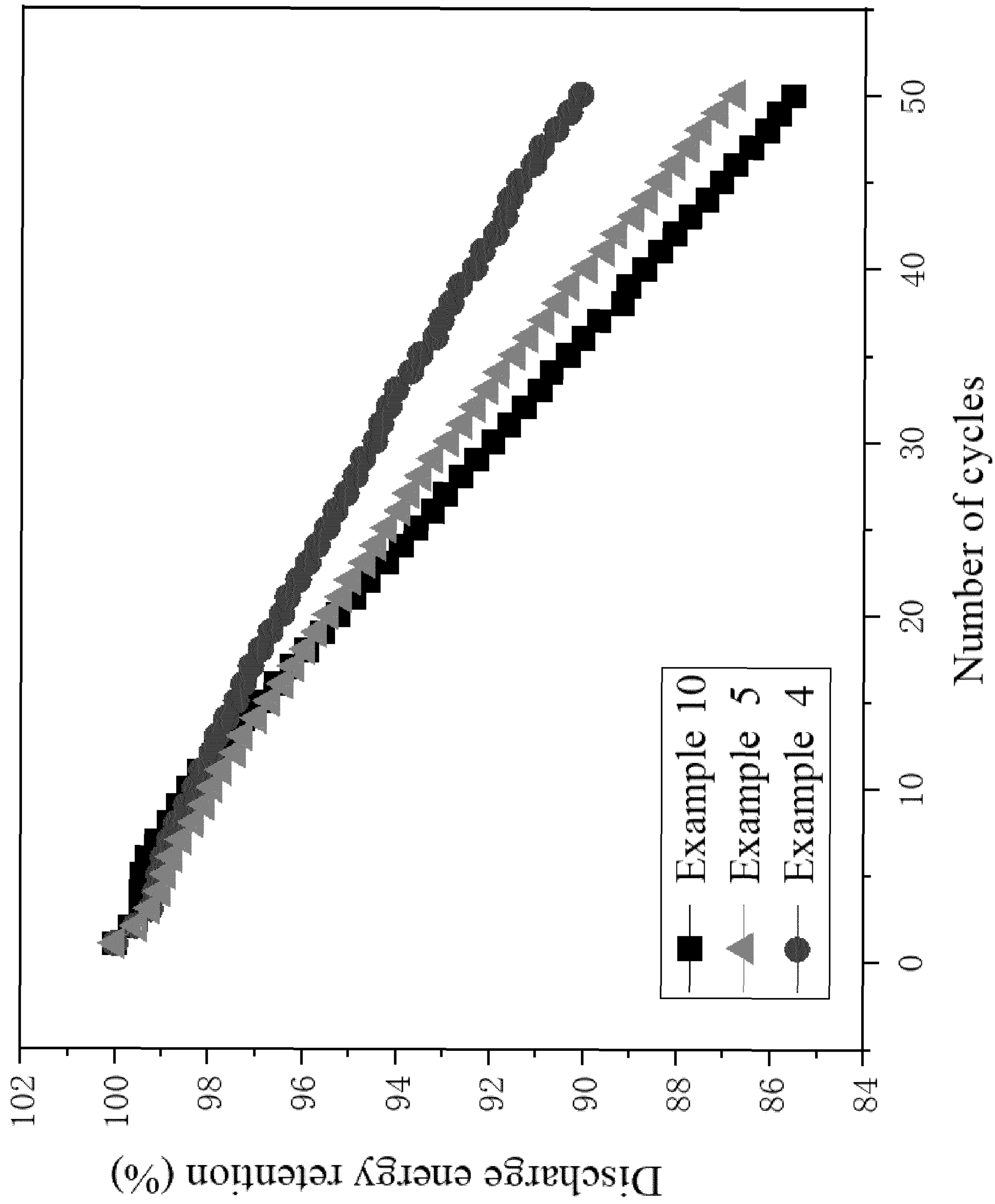
Discharge energy retention (%)
Number of cycles
Example 10
Example 5
Example 4
102
100
98
96
94
92
90
88
86
84
0
10
20
30
40
50

Fig. 6B

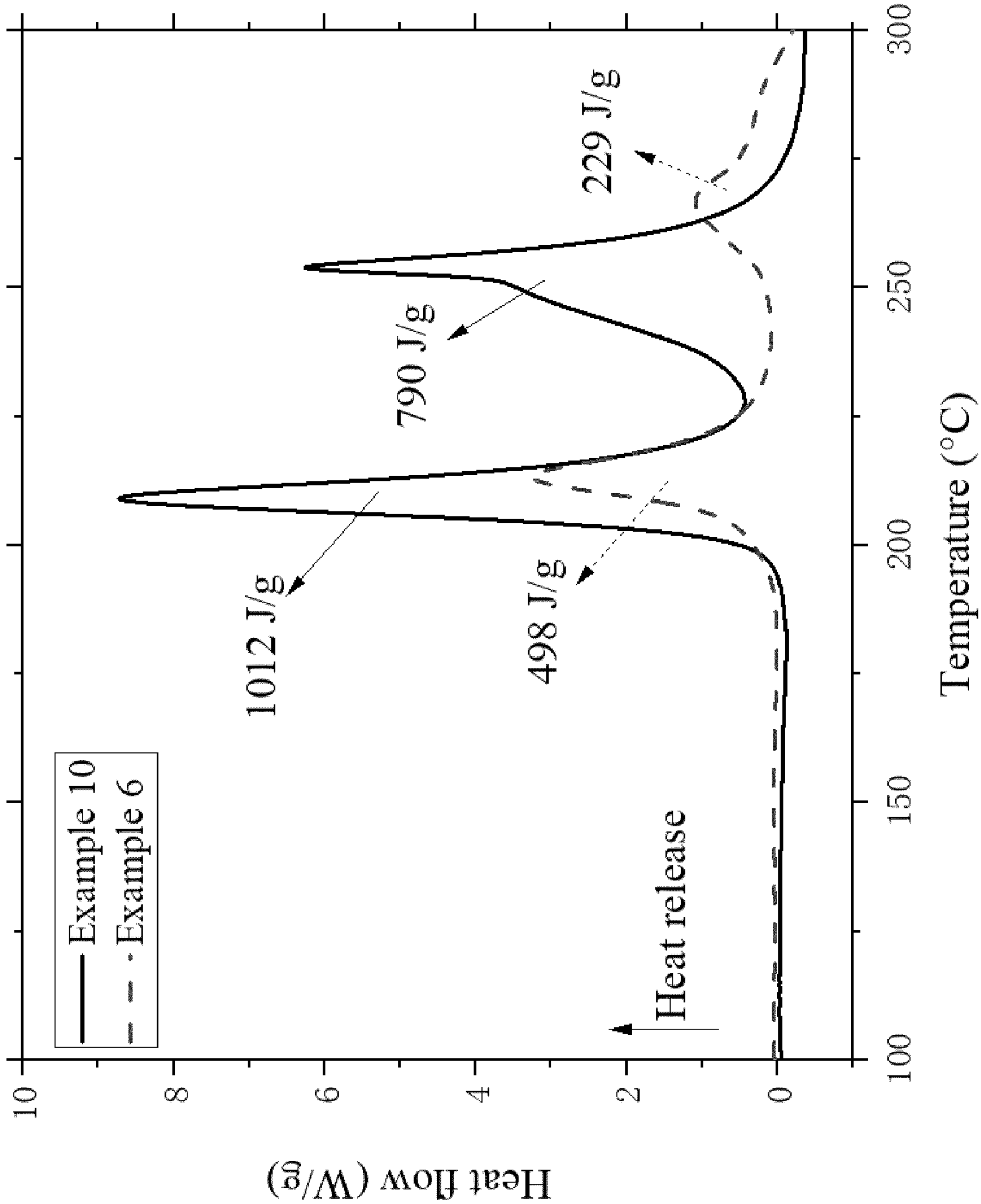
Heat flow (W/g)
Temperature (°C)
Example 10
Example 6
Heat release
1012 J/g
498 J/g
790 J/g
229 J/g
100
150
200
250
300
10
8
6
4
2
0

Fig. 7

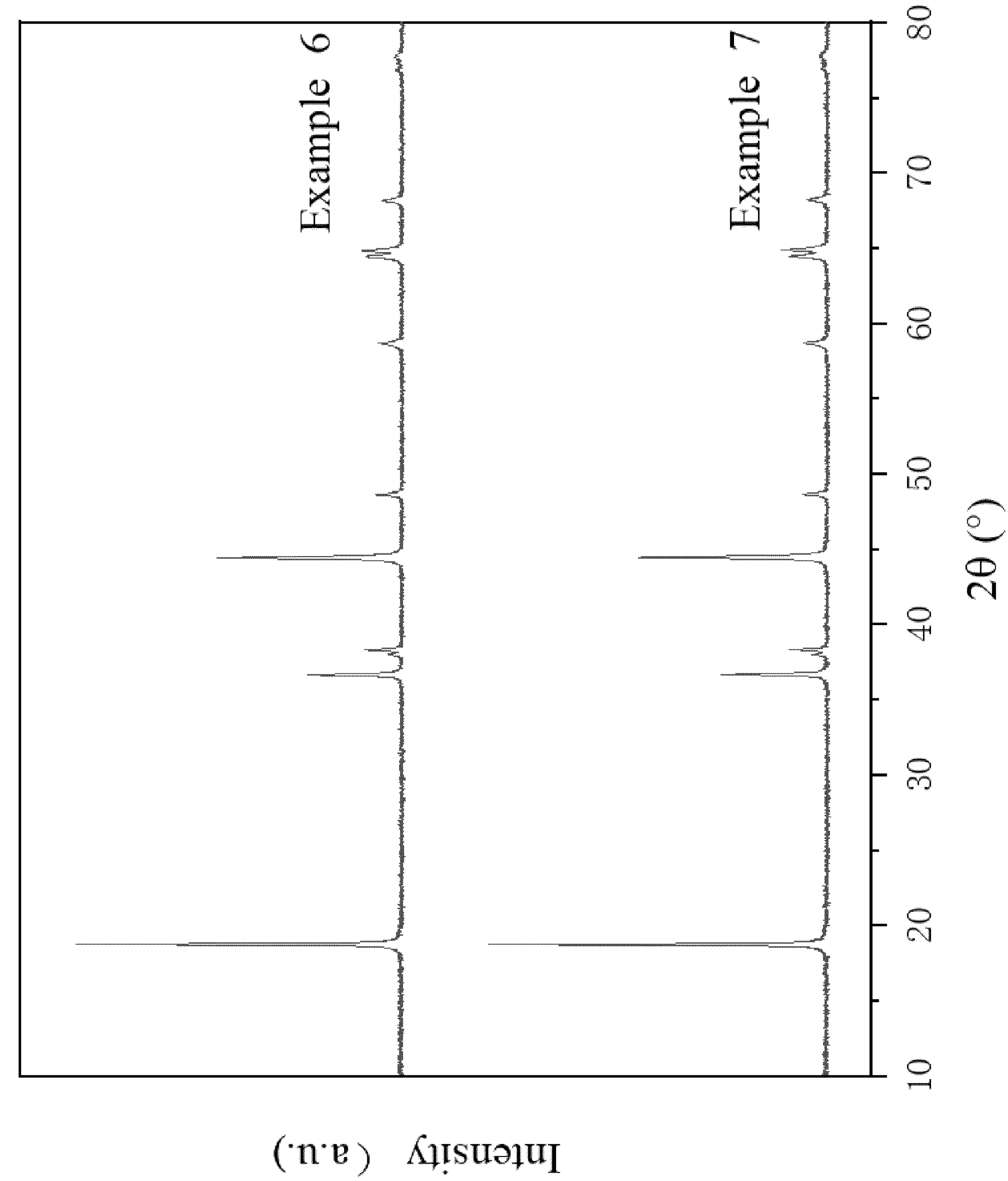


Fig. 8

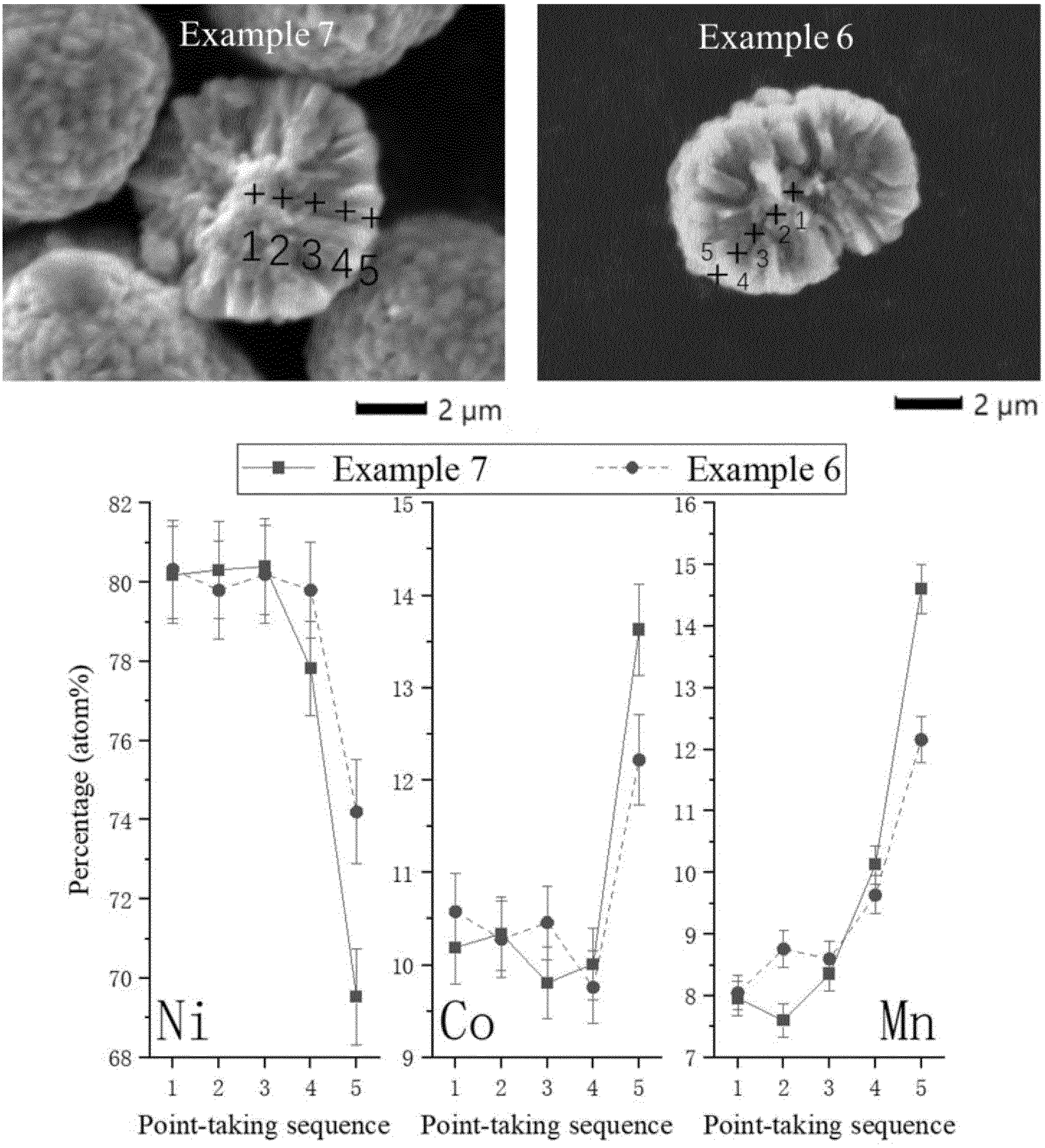
Example 7
Example 6
1 2 3 4 5
2 μm
2 μm
Example 7
Example 6
Percentage (atom%)
Ni
Co
Mn
Point-taking sequence
Point-taking sequence
Point-taking sequence

Fig. 9

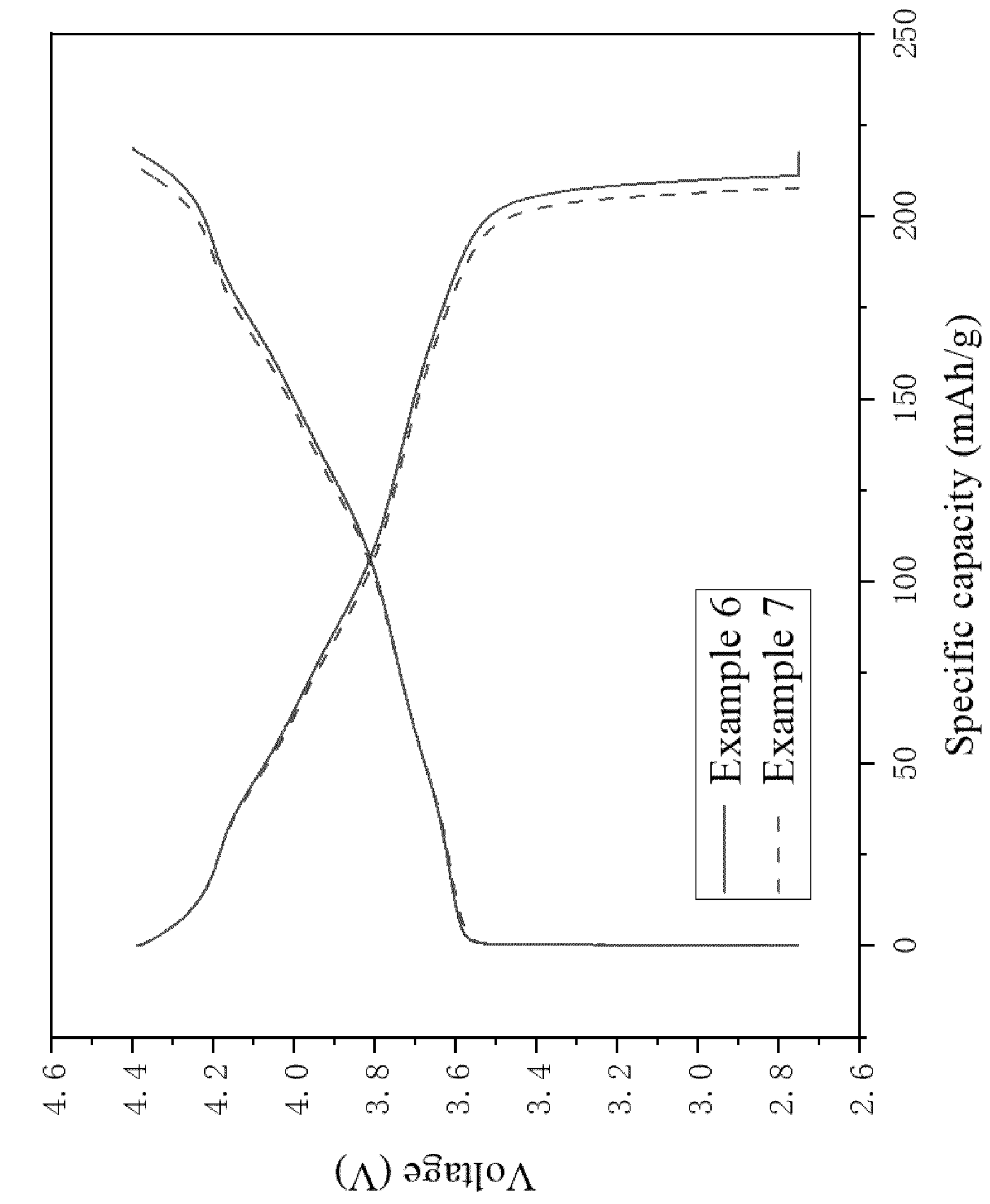
Example 6
Example 7
Voltage (V)
Specific capacity (mAh/g)
4.6
4.4
4.2
4.0
3.8
3.6
3.4
3.2
3.0
2.8
2.6
0
50
100
150
200
250

Fig. 10A

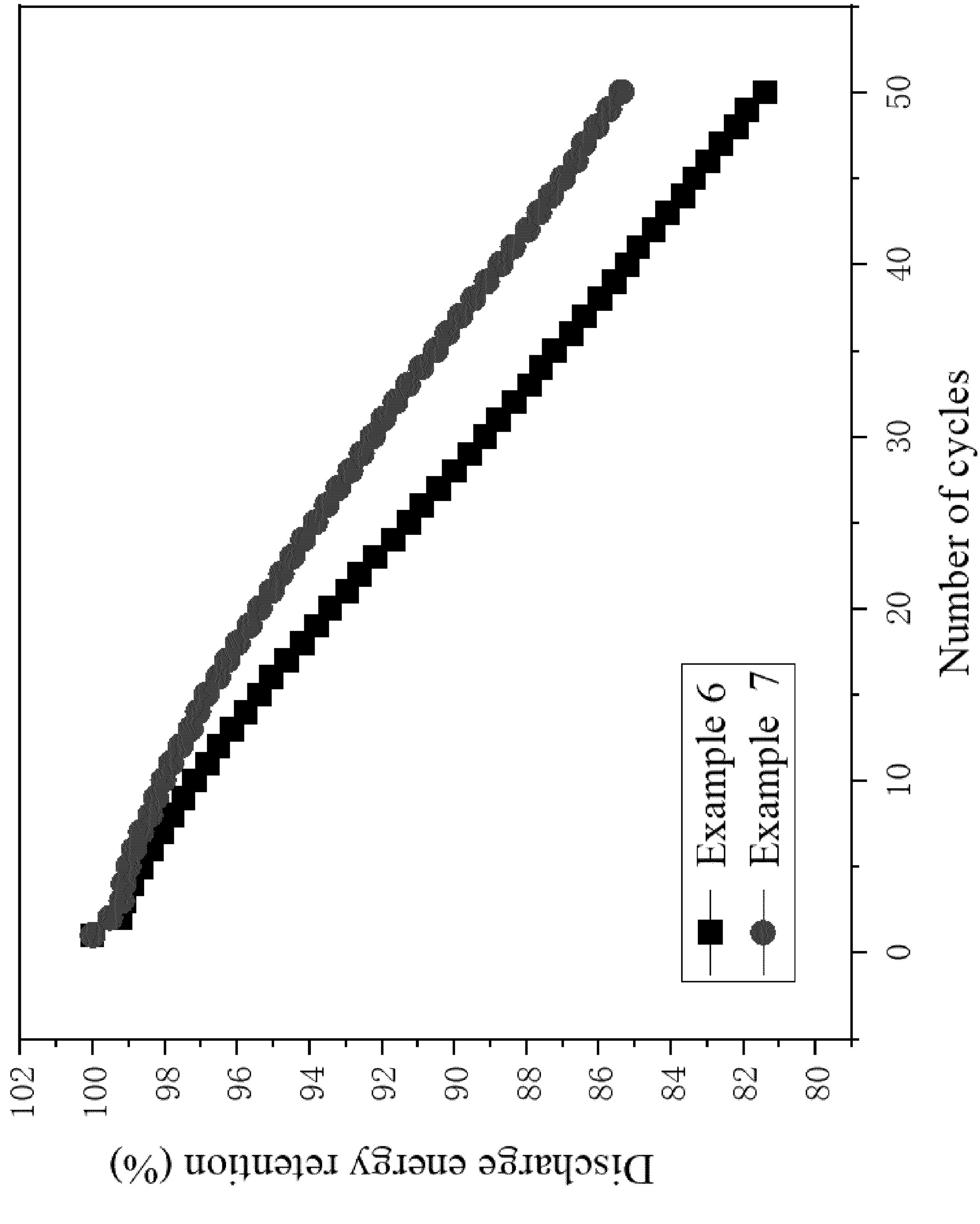
Discharge energy retention (%)
102
100
98
96
94
92
90
88
86
84
82
80
Number of cycles
0
10
20
30
40
50
Example 6
Example 7

Fig. 10B

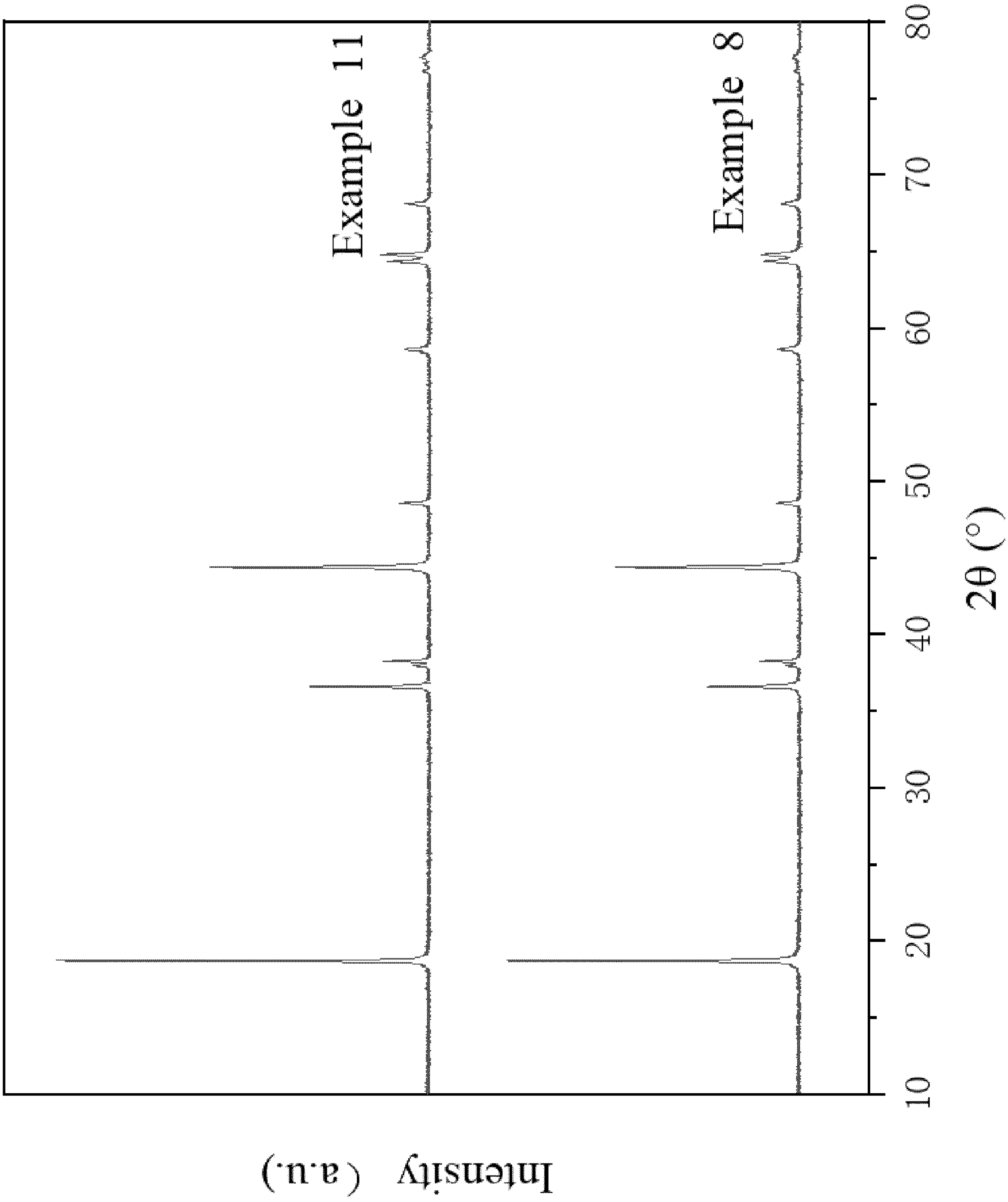


Fig. 11

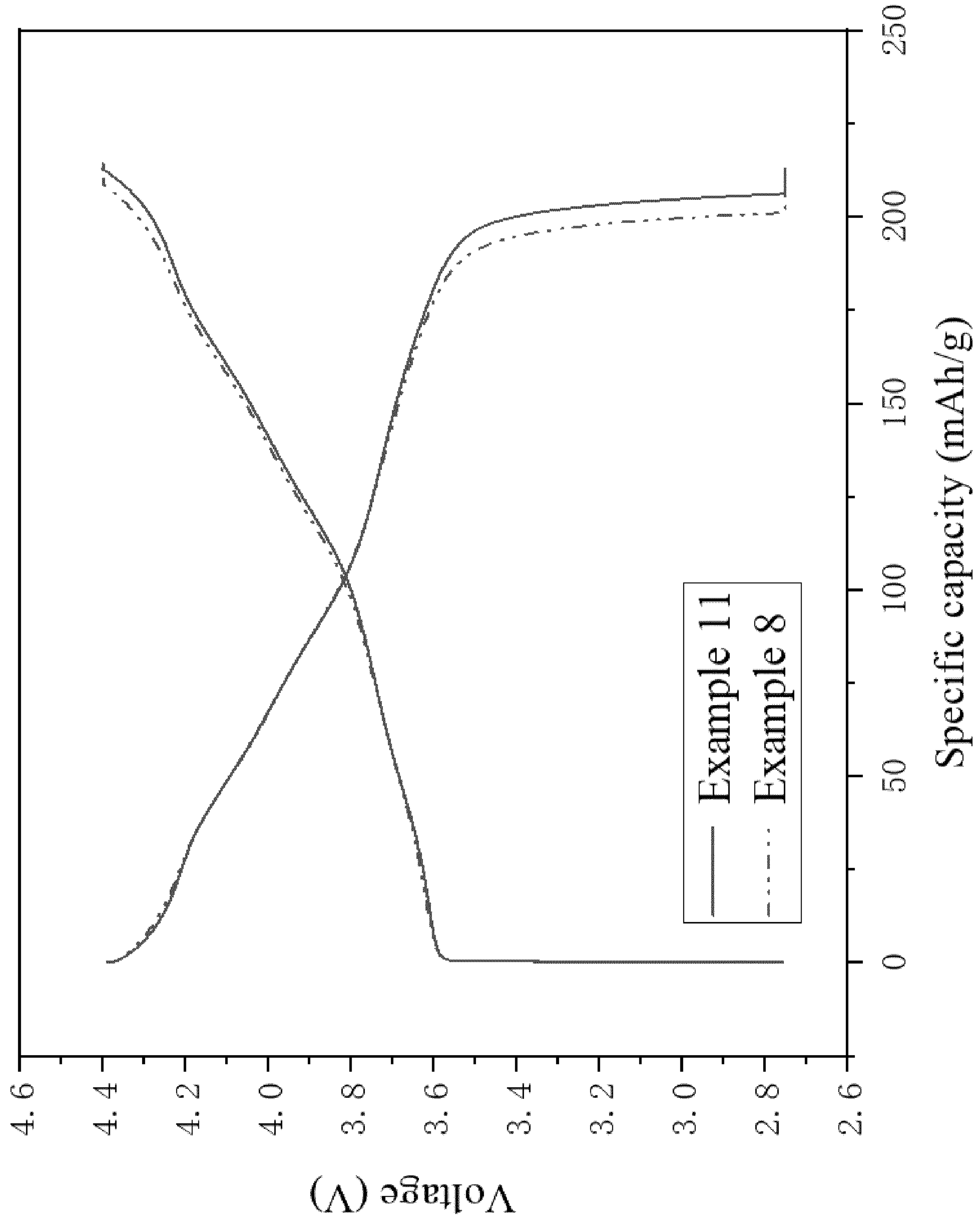
Voltage (V)
4.6
4.4
4.2
4.0
3.8
3.6
3.4
3.2
3.0
2.8
2.6
Specific capacity (mAh/g)
0
50
100
150
200
250
Example 11
Example 8

Fig. 12A

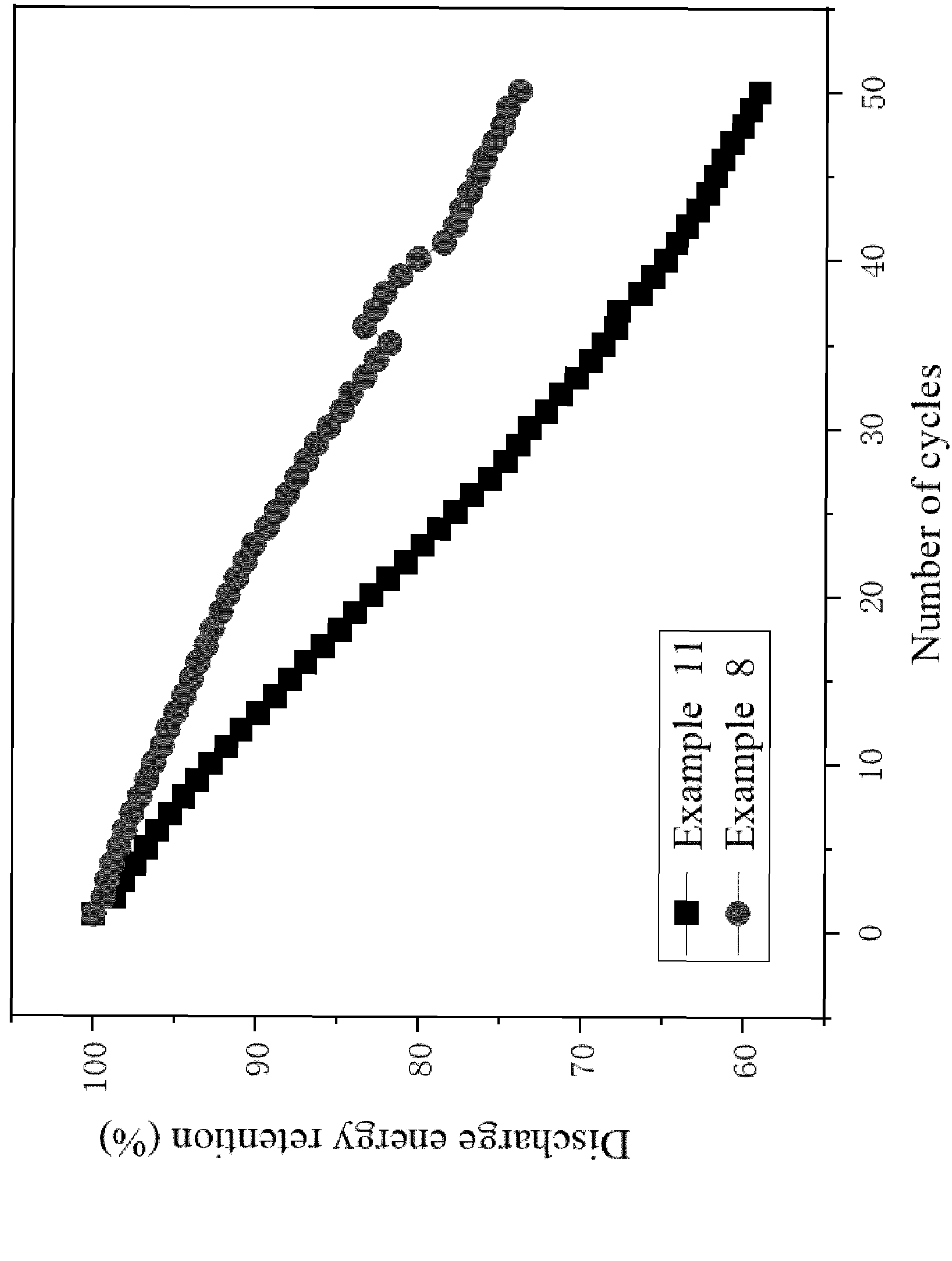
Discharge energy retention (%)
100
90
80
70
60
Number of cycles
0
10
20
30
40
50
Example 11
Example 8

Fig. 12B

**INTERNATIONAL SEARCH REPORT**

International application No. **PCT/CN2020/115435**

**A. CLASSIFICATION OF SUBJECT MATTER**

H01M 4/485(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电池, 正极, 阴极, 锂, 前驱体, 梯度, 两段烧结, 三元材料, 镍, 钴, 锰, 掺杂, 放射, 共沉淀, battery, positive, electrode, negative, lithium, Li, precursor, gradient, sinter+, ternary, material, nickel, cobalt, manganese, Ni, Co, Mn, doping, radiat+, coprecipitat+

**C. DOCUMENTS CONSIDERED TO BE RELEVANT**

| Category* | Citation of document, with indication, where appropriate, of the relevant passages | Relevant to claim No. |
|---|---|---|
| X | CN 106207138 A (INSTITUTE OF CHEMISTRY, CHINESE ACADEMY OF SCIENCES) 07 December 2016 (2016-12-07) claims 1-7, description paragraphs 0004-0023, 0030-0035, 0059-0061, 0079 | 1-9, 15-18 |
| X | CN 103904318 A (HUIZHOU BYD BATTERY CO., LTD.) 02 July 2014 (2014-07-02) description paragraphs 0012-0028 | 1-9, 15-18 |
| Y | CN 106207138 A (INSTITUTE OF CHEMISTRY, CHINESE ACADEMY OF SCIENCES) 07 December 2016 (2016-12-07) claims 1-7, description paragraphs 0004-0023, 0030-0035, 0059-0061 | 10-14 |
| Y | CN 104347865 A (BYD COMPANY LTD.) 11 February 2015 (2015-02-11) description, paragraphs 0004-0033 | 10-14 |
| A | CN 110330060 A (HAINAN UNIVERSITY) 15 October 2019 (2019-10-15) entire document | 1-18 |
| A | CN 109768232 A (GUANGDONG BRUNP RECYCLING TECHNOLOGY CO., LTD. et al.) 17 May 2019 (2019-05-17) entire document | 1-18 |

☑ Further documents are listed in the continuation of Box C. ☑ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **16 April 2021** | **27 April 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2020/115435**

**C. DOCUMENTS CONSIDERED TO BE RELEVANT**

| Category* | Citation of document, with indication, where appropriate, of the relevant passages | Relevant to claim No. |
|---|---|---|
| A | CN 110690416 A (ZHEJIANG CHAOWEI CHUANGYUAN INDUSTRIAL CO., LTD. et al.) 14 January 2020 (2020-01-14)<br>entire document | 1-18 |

Form PCT/ISA/210 (second sheet) (January 2015)

**INTERNATIONAL SEARCH REPORT**
**Information on patent family members**

International application No.
**PCT/CN2020/115435**

| Patent document cited in search report | | | Publication date (day/month/year) | Patent family member(s) | | | Publication date (day/month/year) |
|---|---|---|---|---|---|---|---|
| CN | 106207138 | A | 07 December 2016 | CN | 106207138 | B | 01 October 2019 |
| CN | 103904318 | A | 02 July 2014 | | None | | |
| CN | 104347865 | A | 11 February 2015 | CN | 104347865 | B | 31 May 2017 |
| CN | 110330060 | A | 15 October 2019 | | None | | |
| CN | 109768232 | A | 17 May 2019 | | None | | |
| CN | 110690416 | A | 14 January 2020 | | None | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 109119628 A
- CN 110649252 A
- CN 108767221 A
- CN 108807931 A
- US 8591774 B2